(19) Europäisches Patentamt
European Patent Office
Office européen des brevets

(11) **EP 4 650 865 A1**

(12) **EUROPEAN PATENT APPLICATION**

(43) Date of publication:
**19.11.2025   Bulletin 2025/47**

(21) Application number: **24175546.1**

(22) Date of filing: **13.05.2024**

(51) International Patent Classification (IPC):
**G02F 1/35** $^{(2006.01)}$          **G02F 1/01** $^{(2006.01)}$
**G02F 1/37** $^{(2006.01)}$

(52) Cooperative Patent Classification (CPC):
**G02F 1/353; G02F 1/0136;** G02F 1/37;
G02F 2203/07

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Friedrich-Alexander-Universität Erlangen-Nürnberg**
**91054 Erlangen (DE)**

(72) Inventors:
• **Weitz, Tobias**
  **91058 Erlangen (DE)**
• **Lesko, Daniel**
  **91058 Erlangen (DE)**
• **Wittigschlager, Simon**
  **91058 Erlangen (DE)**
• **Hommelhoff, Peter**
  **91058 Erlangen (DE)**

(74) Representative: **v. Bezold & Partner**
**Patentanwälte - PartG mbB**
**Ridlerstraße 57**
**80339 München (DE)**

(54) **METHOD AND APPARATUS FOR GENERATING VALLEY CURRENT IN A SOLID MATERIAL**

(57)    A valley current generating method for manipulating charge carriers in a solid material 10, having a band structure with a Brillouin zone including valleys localized in the Brillouin zone, comprises a step of irradiating the solid material 10 with pulsed radiation comprising polarized radiation pulses 3, which are created by a superposition of first radiation pulses 1 having a first centre frequency and a first electric field with a first electric field polarization and second radiation pulses 2 having a second centre frequency and a second electric field with a second electric field polarization, wherein the first and second centre frequencies differ from each other, the polarized radiation pulses 3 have an electric field shaped such that a net electrical charge carrier current is created in the solid material 10 by one of the valleys, each of the first and second centre frequencies is included in a spectral range covering at least one of ultraviolet, visible and infrared light frequencies, and the electric field of the polarized radiation pulses 3 is shaped by setting the first and second electric field polarizations such that they differ from each other and by setting a relative phase of the first and second electric fields. Furthermore, a valley current generating apparatus 100 for manipulating charge carriers in a solid material 10 and methods of using the valley current generating method or apparatus are disclosed.

FIG. 1

**Description**

Field of the invention

The invention relates to a method and an apparatus for generating valley current in a solid material, like a 2D material, e.g., graphene, in particular to a valley current generating method and a valley current generating apparatus for manipulating charge carriers in the solid material. Applications of the invention are available in the fields of e.g., optical signal processing, valleytronics or sensing optical light fields.

Prior art

In the present specification, reference is made to the following prior art illustrating the technical background of the invention:

[1] D. N. Basov et al. "Towards properties on demand in quantum materials" Nature Materials 16, 1077-1088 (2017);
[2] M. S. Rudner et al. "Band structure engineering and non-equilibrium dynamics in Floquet topological insulators" Nature Reviews Physics 2, 229-244 (2020);
[3] E. Goulielmakis et al. "Attosecond control and measurement: Lightwave electronics" Science 317, 769-775 (2007);
[4] M. Garg et al. "Multi-petahertz electronic metrology" Nature 538, 359-363 (2016);
[5] T. Higuchi et al. "Light-field-driven currents in graphene" Nature 550, 224-228 (2017);
[6] T. Boolakee et al. "Light-field control of real and virtual charge carriers" Nature 605, 251-255 (2022);
[7] K. F. Mak et al. "Control of valley polarization in monolayer MoS2 by optical helicity" Nature Nanotechnology 7, 494-498 (2012);
[8] Y. Ye et al. "Electrical generation and control of the valley carriers in a monolayer transition metal dichalcogenide" Nature Nanotechnology 11, 598-602 (2016);
[9] T. Oka et al. "Photovoltaic hall effect in graphene" Physical Review B 79, 081406(R) (2009);
[10] J. W. McIver et al. "Light-induced anomalous hall effect in graphene" Nature Physics 16, 38-41 (2019);
[11] R. E. F. Silva et al. "All-optical valley switch and clock of electronic dephasing" Optics Express 30, 30347 (2022);
[12] N. Rana et al. "All-optical ultrafast valley switching in two-dimensional materials" Physical Review Applied 19, 034056 (2023);
[13] F. Langer et al. "Lightwave valleytronics in a monolayer of tungsten diselenide" Nature 557, 76-80 (2018);
[14] I. Tyulnev et al. "Valleytronics in bulk MoS2 by optical control of parity and time symmetries" arXiv:2302.12564 (2023);
[15] S. Mitra et al. "Lightwave-controlled band engineering in quantum materials, arXiv:2303.13044 (2023);
[16] D. Xiao et al. "Valley-contrasting physics in graphene: Magnetic moment and topological transport" Physical Review Letters 99, 236809 (2007);
[17] Y. H. Wang et al. "Observation of Floquet-Bloch states on the surface of a topological insulator" Science 342, 453-457 (2013);
[18] Y. Kobayashi et al. "Floquet engineering of strongly driven excitons in monolayer tungsten disulfide" Nature Physics 19, 171-176 (2023);
[19] S. Ito et al. "Build-up and dephasing of Floquet-Bloch bands on subcycle timescales" Nature 616, 696-701 (2023);
[20] V. Tiwari et al. "Floquet theory and computational method for the optical absorption of laser-dressed solids" Physical Review B 108 (2023);
[21] O. Neufeld et al. "Floquet group theory and its application to selection rules in harmonic generation" Nature Communications 10, 405 (2019);
[22] A. Castro et al. "Floquet engineering the band structure of materials with optimal control theory" Physical Review Research 4, 033213 (2022);
[23] Y. Wang et al. "Topological Floquet engineering using two frequencies in two dimensions" Physical Review A 107, 043309 (2023);
[24] A. Galler et al. "Mapping light-dressed Floquet bands by highly nonlinear optical excitations and valley polarization" The Journal of Physical Chemistry Letters 14, 11298-11304 (2023);
[25] A. H. C. Neto et al. "The electronic properties of graphene" Reviews of Modern Physics 81, 109-162 (2009);
[26] J. R. Schaibley et al. "Valleytronics in 2D materials" Nature Reviews Materials 1, 16055 (2016);
[27] O. Neufeld et al. "Light-driven extremely nonlinear bulk photogalvanic currents" Physical Review Letters 127, 126601 (2021);
[28] M. S. Mrudul et al. "Light-induced valleytronics in pristine graphene" Optica 8, 422-427 (2021);
[29] Á. Jiménez-Galán et al. "Sub-cycle valleytronics: control of valley polarization using few-cycle linearly polarized pulses" Optica 8, 277-280 (2021);

[30] Y. Jiang et al. "Generation of pure bulk valley current in graphene" Physical Review Letters 110 (2013);

[31] S. Sharma et al. "Giant and controllable valley currents in graphene by double pumped THz light" Nano Letters 23, 10305-10310 (2023);

[32] S. Sharma et al. "Light-shaping of valley states" Nano Letters 23, 11533-11539 (2023);

[33] D. Brida et al. "Phase-locked pulses for two-dimensional spectroscopy by a birefringent delay line" Optics Letters 37, 3027 (2012);

[34] R. Atanasov et al. "Coherent control of photocurrent generation in bulk semiconductors" Physical Review Letters 76, 1703-1706 (1996);

[35] F. Langer et al. "Few-cycle lightwave-driven currents in a semiconductor at high repetition rate" Optica 7, 276-279 (2020);

[36] C. Heide et al. "Optical current generation in graphene: CEP control vs $\omega + 2\omega$ control" Nanophotonics 10, 3701-3707 (2021);

[37] V. Hanus et al. "Light-field-driven current control in solids with pJ-level laser pulses at 80 MHz repetition rate" Optica 8, 570-576 (2021);

[38] O. Neufeld et al. "Band nonlinearity-enabled manipulation of Dirac nodes, Weyl cones, and valleytronics with intense linearly polarized light" Nano Letters 23, 7568-7575 (2023);

[39] Á. Jiménez-Galán et al. "Lightwave control of topological properties in 2d materials for sub-cycle and non-resonant valley manipulation" Nature Photonics 14, 728-732 (2020);

[40] M. S. Wismer et al. "Strong-field resonant dynamics in semiconductors" Physical Review Letters 116, 197401 (2016);

[41] M. S. Mrudul et al. "Controlling valley-polarisation in graphene via tailored light pulses" Journal of Physics B: Atomic, Molecular and Optical Physics 54, 224001 (2021);

[42] T. Weitz et al. "Strong-field Bloch electron interferometry for band structure retrieval. arXiv:2309.16313 (2023);

[43] H. K. Kelardeh et al. "Graphene in ultrafast and superstrong laser fields" Physical Review B 91, 045439 (2015);

[44] G. Ghosh "Dispersion-equation coefFicients for the refractive index and birefringence of calcite and quartz crystals" Optics Communications 163, 95-102 (1999);

[45] U. D. Giovannini et al. "Floquet analysis of excitations in materials" Journal of Physics: Materials 3, 012001 (2019); and

[46] S. Y. Kruchinin et al. "Colloquium: Strong-field phenomena in periodic systems" Reviews of Modern Physics 90, 021002 (2018).

It is generally known that the processing of logical information in conventional computer architecture is increasingly reaching its limits in terms of miniaturization on a nanometer scale and clock rates in the gigahertz range. Information processing in inherent quantum states of two-dimensional solids using intense light pulses has recently emerged as a novel and promising approach for overcoming these limits. With the implementation of such an architecture, the orders of magnitude could be dramatically reduced, namely to a single atomic layer, i.e. a few angstroms ($1\,\text{Å} = 10^{-10}\,\text{m}$) thick, and to the femtosecond duration of a field cycle of light ($1\,\text{fs} = 10^{-15}\,\text{s}$). Two-dimensional quantum materials, especially two-dimensional Dirac materials, have established themselves as cornerstones for the ultrafast excitation and control of charge carrier motion. These materials have become ideal platforms for both the investigation of new light-field-driven phenomena such as band structure engineering [1, 2] or the realization of lightwave information processing [3-6].

Two-dimensional Dirac materials, such as graphene and transition metal dichalcogenides, stand out for as candidates for lightwave control of charge carriers. This is due to the existence of valley states in the band structure of the material, within the Brillouin zone thereof, providing an additional valley degree of freedom granted by the two-dimensional quantum materials to valence and conduction band electrons. In particular, individual excitation of two degenerate valleys located at K and K' can be addressed, as described with further details below. This approach heralds new pathways of electron manipulation ranging from the excitation of valley-selective photo-luminescence [7, 8] and valley Hall conductivity [9-12] to lightwave-driven anomalous signatures in high harmonics [13-15]. In particular, electrons located in one or the other valley (K and K') can be excited differently by light with suitable polarization, resulting in new degrees of freedom, e.g., in optical excitation and thus in information processing. Applications in the field of exploiting valleys and their degrees of freedom are called "valleytronics" (see e.g., [26]).

So far, the valley-degree of freedom was unlocked by irradiating a sample with circularly polarized light to access the valley-dependent helicity selection rules of semiconductor 2D materials with broken inversion symmetry [7, 13, 16]. Another possible, and largely unexplored, approach is to use intense complex radiation fields to impose pseudo-selection rules by optically reshaping the band structure. By harnessing the periodicity of light, an entirely new so-called light-dressed Floquet-Bloch band structure is created [17-20]. Applying purpose-tailored waveforms, the K and K' valley can be addressed differently such that valley-selective occupations and currents become feasible even in the absence of helicity selection rules. This way, valleytronics could become possible even for an inversion-symmetric lattice as provided by the gapless semimetal graphene, which might appear unsuitable on first glance [21-24].

For practical valleytronics, there is an interest in valley-selective current generation, e. g., for signal processing or data storing purposes. Up to now, valley-selective current generation has been described on the basis of theoretical concepts only. For example, a theoretical concept of inducing valley currents by quantum pumping is described in [30], which employs mechanic deformations of graphene. Another theoretical approach is based on so called hencomb excitation pulses obtained by a superposition of THz radiation with infrared (IR) laser radiation (see e.g., [31, 32]). Due to practical limitations in manipulating the THz radiation, e.g., setting the polarization thereof, this process has not been tested in practice in the past.

The investigation of radiation based manipulation of charge carriers and quantum states thereof is not limited to two-dimensional quantum materials. Other layer or bulk materials, in particular semiconductor or semimetal materials, having local extrema, in particular valley states, in their band structure (see e.g., [14]), also would be of interest.

Objective of the invention

The objective of the invention is to provide an improved valley current generating method and an improved valley current generating apparatus for manipulating charge carriers in a solid material, being capable of avoiding limitations of conventional techniques. In particular, the objective of the invention is to provide the valley current generating method and/or apparatus with capability of practical operation, with improved controllability of valley states in the solid material, with improved controllability of radiation fields driving the valley current generation, with reduced complexity of creating radiation fields driving the valley current generation and/or with extended and/or new applications.

Brief summary of the invention

These objectives are correspondingly solved by a valley current generating method and/or a valley current generating apparatus comprising the features of the independent claims, respectively. Preferred embodiments and applications of the invention arise from the dependent claims.

According to a first general aspect of the invention, the above objective is solved by a valley current generating method for manipulating charge carriers in a solid material having a band structure with a Brillouin zone including valleys localized in the Brillouin zone. The valley current generating method comprises a step of irradiating the solid material with pulsed radiation comprising polarized radiation pulses, which are created by a superposition of first radiation pulses having a first centre frequency and a first electric field with a first electric field polarization and second radiation pulses having a second centre frequency and a second electric field with a second electric field polarization. The first and second centre frequencies differ from each other. The polarized radiation pulses have an electric field shaped such that a net electrical charge carrier current is created in the solid material by one of the valleys.

According to the invention, each of the first and second centre frequencies is included in a spectral range covering at least one of ultraviolet (uv, about 100 nm to about 400 nm), visible (vis, about 400 nm to about 780 nm) and infrared (ir, about 780 nm to about 1 mm, in particular about 780 nm to about 6 $\mu$m) light frequencies. Furthermore, according to the invention, the electric field of the polarized radiation pulses is shaped by setting the first and second electric field polarizations (or: polarization types, i.e., circular or linear or elliptic polarization such that they differ from each other and by setting a relative phase of the first and second electric fields.

According to a second general aspect of the invention, the above objective is solved by a valley current generating apparatus, being configured for manipulating charge carriers in a solid material. The valley current generating apparatus comprises the solid material having a band structure with a Brillouin zone including valleys localized in the Brillouin zone, an electrode device with at least two electrode contacts (or: electrodes) being coupled with the solid material, and an irradiation device being arranged for irradiating the solid material with pulsed radiation comprising polarized radiation pulses, wherein the irradiation device is configured for creating the polarized radiation pulses by creating first radiation pulses having a first centre frequency and a first electric field with a first electric field polarization and second radiation pulses having a second centre frequency and a second electric field with a second electric field polarization and by superimposing the first and second radiation pulses. The irradiation device is configured such that the polarized radiation pulses are created with the first and second centre frequencies differing from each other. Furthermore, the irradiation device is configured for creating the polarized radiation pulses with an electric field shaped such that a net electrical charge carrier current is created in the solid material by one of the valleys.

According to the invention, the irradiation device is configured for creating the first and second radiation pulses such that each of the first and second centre frequencies is included in a spectral range covering at least one of ultraviolet, visible and infrared light frequencies. Furthermore, according to the invention, the irradiation device is configured for creating the first and second radiation pulses with the electric field of the polarized radiation pulses being shaped by setting the first and second electric field polarizations such that they differ from each other and by setting a relative phase of the first and second electric fields. Preferably, the valley current generating apparatus or an embodiment thereof is adapted for executing the valley current generating method of the first general aspect of the invention or an embodiment thereof.

According to a third general aspect of the invention, the above objective is solved by a method of using the valley current generating method of the first general aspect of the invention or an embodiment thereof and/or using the apparatus of the second general aspect of the invention or an embodiment thereof for at least one of encoding, processing and/or storing information, lightwave information processing, processing logical operations, and sensing a polarization of a light field. Advantageously, the invention provides a basis for a computer architecture with a new storage and/or switching process, wherein logical states are processed by manipulating valley currents, e.g. based on the technical configuration described in valleytronics (see e.g., [26]). As a further alternative, the inventive technique may be used for investigating quantum properties of the band structure of solid materials, in particular of 2D materials, based on an investigation of currents created by bichromatic pulses with defined relative phase properties.

According to the invention, "generating a valley current" generally refers to creating a net electrical charge carrier current in the solid material by at least one of the valleys, in particular by creating a population imbalance within one of the valleys caused by the polarized two color irradiation of the invention and generating a current from the population imbalance. The valley current may be considered as a photocurrent in the solid material. The term "net" refers to the fact that the created valley current does not exist only during the duration of each of the superimposed radiation pulses. The valley current persists after passage of each of the superimposed radiation pulses. The transport of charge carriers may be described by a transport of electrons (charge states with negative charge) or holes (charge states with positive charge). The valley current may be selectively excited exclusively in one or exclusively in the other or in a combination of the valleys. Advantageously, the valley current may be generated at room temperature of the solid material. Alternatively, an operation at lower temperatures is possible.

The current magnitude of the valley current may depend on at least one of the (joint) pulse duration, the centre wavelengths and the field strengths of the first and second radiation pulses. If the pulse duration is shorter, the pulses have a broader spectrum, resulting in a larger excited electronic density of states when interacting with the solid materials and, with the appropriate polarization, a larger number of electrons contributing to the valley current. Furthermore, the valley current may be increased at higher field strengths (higher excitation probability) and longer wavelengths (more pronounced intraband trajectories that match with the shape of the valleys).

The polarized radiation pulses are created by the superposition of the mutually different first and second radiation pulses. Due to the different frequencies of the first and second radiation pulses, the polarized radiation pulses may be indicated as two-color or bichromatic pulses. Preferably, both of the first and second radiation pulses may propagate collinearly. The superposition may be continuously kept during irradiation of the solid material. Preferably, the solid material may be irradiated under normal incidence. Advantageously, additional (but not exclusive) currents from a photon drag effect can be avoided by the normal incidence. Alternatively, irradiation under an angle (relative to normal direction) may be provided if the additional currents can be tolerated. The field strength of the first and second radiation pulses preferably may be selected such that the charge carriers may be appropriately driven within the band structure of the solid material. The field strength to be used in practice may be selected based e.g., on numerical simulations and/or experimental tests.

Advantageously, the above objective is solved by generating a valley current by the effect of the radiation pulses with frequencies (or correspondingly wavelengths or colors) in the above uv-, vis- and/or ir-spectral ranges of light fields. Accordingly, the radiation pulses may be indicated as light pulses or optical pulses. Preferably, the radiation pulses may comprise laser pulses. In contrast to the known approach of using THz hencomb excitation pulses, the invention may exclusively employ light pulses, i.e., only the above uv-, vis- and/or ir-spectral ranges, for manipulating valley states and generating valley current. The valley current may be generated by the effect of the superimposed radiation pulses only, i.e., the solid material may be free of an external potential, e.g., free of an external electric voltage, free of external electric bias fields and/or free of a mechanical strain. The light pulse interaction with the solid material is the source of inventive current generation.

Employing the light pulses offers substantial advantages in terms of controllability light field parameters, like frequency, polarization, and temporal delay (relative phase) between the first and second radiation pulses and in terms of available techniques for creating and relaying the first and second radiation pulses. Due to the application of light pulses, a radiation driven generation of valley currents is obtained for the first time, which is capable of practical operation. Furthermore, the light pulses have advantages in terms for representing signals or states to be processed, e.g., in a signal processing application of the invention. Accordingly, extended and new applications of valleytronics are offered in practice.

Preferably, the first and/or second radiation pulses may have a peak electric field strength in a range from 0.1 to 10 V/nm. Advantageously, this peak electric field strength facilitates to exert a force to electrical charge carriers with a comparable magnitude to the atomic binding forces. Both of the first and second radiation pulses may have equal or different peak electric field strengths. With the practical tests described below, peak field strengths of 0.27 V/nm (first radiation pulse 1) and 0.20 V/nm (first radiation pulse 2) have been employed, respectively. Additionally or alternatively, the first and/or second radiation pulses may have an intensity full-width-half-maximum (FWHM) pulse duration comprising 1 to 100 periods of their respective electric fields in order. Advantageously, a periodic exertion of a force to electrical charge carriers is preferably supported in this range. With the practical tests described below, intensity FWHM pulse durations of 170 fs (first radiation pulse 1) and 110 fs (second radiation pulse 2) have been employed, respectively. With period durations of 5.2 fs (pulse 1, centre wavelength about 1,5 $\mu$m) and 2.6 fs (pulse 2, centre wavelength about 780 nm), these pulses comprise 32.7 and 42.3 periods, respectively.

By setting the mutually different first and second electric field polarizations and the relative phase of the first and second electric fields, the superimposed radiation pulses are created with a resulting effective electric light field which allows optically addressing and controlling individual valleys granted by the band structure of the solid material, like in particular a two-dimensional (2D) material. The electric light field is the electric field component of the electromagnetic optical field of the laser pulses.

As summarized above, 2D semiconductors readily enable valley control in the form of valley polarization. However, they impede current flow across the material, thereby severely limiting valleytronics. The inventors have found that the generation of valley currents, e.g., in monolayer graphene as a 2D conductor, is possible by employing tailored bichromatic light pulse waveforms.

The effect of the bichromatic light pulse waveforms, in particular the creation of valley current by the interaction of the bichromatic light pulse waveforms with the solid material, in particular the valley states thereof, may be described e.g., by Floquet theory or sub-cycle strong-field physics. Based on the Floquet theory, the bichromatic light pulse waveforms may be designed such that they access graphene's valley degrees of freedom by reshaping the valleys to Floquet-dressed Bloch bands specific to the incident lightwave shape. Based on the concepts of strong-field physics, the intra- and interband trajectory of electrons driven by the bichromatic light pulse waveform provides access to valley-specific differences in sub-cycle electron dynamics.

By tuning the polarization and the relative phase between the two superimposed radiation pulses with different colors, the inventors are able to practically map out the complete phase space of current directionality and valley selectivity. The inventors observed phase-sensitive currents with 100 % valley purity, and valley polarization in the absence of currents. Furthermore, the invention allows to investigate sub-optical-cycle dynamics, providing deep insights to the emergence of valley selectivity. The inventor's findings substantially advance the understanding of attosecond electron control inside of matter and increase the design space for lightwave valleytronics by providing access to valley current and polarization.

According to the invention, the electric field of the polarized radiation pulses is shaped by setting the first and second electric field polarizations such that they differ from each other. Advantageously, the different polarizations provide superimposed polarized irradiation pulses with an effective polarization represented by an asymmetric Lissajous figure (Lissajous figure which is free of a symmetry). The asymmetric Lissajous figure is directly related to the excited population imbalance of one of the valleys causing the current from the population imbalance. Different polarizations of the first and second electric fields of the first and second radiation pulses, resp., may be provided e.g. by employing the first radiation pulse with a circular polarization and the second radiation pulse with an elliptic (up to linear polarization), or vice versa.

According to a preferred embodiment of the invention, the first centre frequency may be a frequency of infrared light and the second centre frequency may be a frequency of visible light. Accordingly, in terms of the valley current generating apparatus, the irradiation device preferably may include a radiation source device being configured for creating the first radiation pulses with the first centre frequency providing a frequency of infrared light and the second radiation pulses with the second centre frequency providing a frequency of visible light. Employing ir and vis light has particular advantages resulting from available laser sources and techniques of manipulating the polarization and mutual phases thereof.

Particularly preferred, the second radiation pulses may be provided by creating a second or higher harmonic of the first radiation pulses. Accordingly, the irradiation device of the valley current generating apparatus preferably may include an optical non-linear element being arranged for providing the second radiation pulses by creating a second or higher harmonic of the first radiation pulses. Advantageously, by employing the second or higher (in particular even multiple) harmonics, phase stability of the polarized radiation pulses is ensured. The first and second radiation pulses can be created by a single laser oscillator and provided with a predefined spectral and temporal relationship, so that precise and reliable setting the field polarizations and relative phase of the first and second radiation pulses is facilitated.

Alternatively, the first and second radiation pulses can be created by different laser oscillators. In this case, additional degrees of freedom in setting the frequencies of the first and second radiation pulses may be obtained. For example, the frequency of the second radiation pulse may be a non-integer multiple of the frequency of the first radiation pulse, or the frequencies of the first and second radiation pulses may be set independently of each other.

According to a further advantageous embodiment of the invention, the first radiation pulses may have a circular polarization and the second radiation pulses may have a polarization deviating from a circular polarization, in particular comprising an elliptic or linear polarization. Accordingly, in terms of the valley current generating apparatus, the irradiation device may be configured for providing the first radiation pulses with the circular polarization and the second radiation pulses with the polarization deviating from the circular polarization, in particular comprising the elliptic or linear polarization. With these variants, setting the polarization of the first and second radiation pulses with available polarizing components is facilitated in an advantageous manner.

The valley current may be generated in any solid material having a band structure with a Brillouin zone including locally limited extrema of the band structure localized in the Brillouin zone and providing valley states of charge carriers. Preferably, the solid material may have a crystalline structure, e.g., monocrystalline structure, at least in a range of irradiation thereof. According to particularly preferred embodiments, the solid material may comprise a single layer or a multilayer 2D material, e.g., made of graphene or a transition metal dichalcogenide, like tungsten disulfide. Preferably, the solid material may comprise one single monolayer, e.g., of graphene. Alternatively, a multilayer arrangement made of multiple monolayers layers may be used. 2D materials may have advantages in terms of existence of pronounced valley states, miniaturization capability and the absence of propagation effects of the incident pulses, e.g., pulse deformation by dispersion.

Alternatively, the solid material may comprise a layer or bulk shaped three-dimensional (3D) material, like e.g. $MoS_2$. Contrary to e.g., [31, 32], the solid material, in particular the 2D material, may consist of a non-doped material, i. e., the solid material may be free of foreign dopants, e.g., the graphene may consist of carbon only.

The solid material may be supported by a substrate being configured for carrying the solid material with at least one surface exposed for irradiation. The substrate may be considered as a component of the valley current generating apparatus. The substrate may provide further advantages for setting physical conditions of the solid material, like e.g., a temperature or heat conductance away from the interaction region, and/or for picking up the valley current. Preferably, the substrate may comprise a dielectric material, optionally with integrated functional elements, e.g., for tempering the solid material, and/or substrate conductor lines for picking up the current. Substrate conductor lines may be provided as the electrodes of the solid material and/or for contacting the electrodes of the solid material.

Employing the substrate is preferred in particular for generating valley currents with a 2D material. Alternatively, the 2D material can be provided in a free-standing material, e.g., suspended over a frame or grid structure, like a TEM grid. Alternatively, the substrate also may be provided for supporting a 3D material.

Further advantages of the invention arise from the fact that various optical arrangements for setting the first and second radiation pulses are available. According to a preferred variant, the relative phase of the first and second electric fields may set by transmitting the first and second radiation pulses through separate beam paths of an interferometer including at least one adjustable phase setting element in at least one of the beam paths thereof. In terms of the apparatus, the valley current generating apparatus, preferably the irradiation device thereof, may include an interferometer with at least one adjustable phase setting element in at least one beam path of the interferometer, said at least one adjustable phase setting element being configured for setting the relative phase of the first and second electric fields. Preferably, the interferometer comprises a collinear interferometer, wherein the beam paths of the first and second radiation pulses are collinear. The interferometer may comprise e.g., a Michelson type interferometer. With the at least one phase setting element arranged exclusively in one of the beam paths and acting exclusively on one of the first and second radiation pulses, the relative phase may be set by adjusting a temporal relation between the first and second radiation pulses.

Alternatively or additionally, the first and second electric field polarizations may be set by transmitting the first and second radiation pulses through a set of frequency specific polarization setting elements. Accordingly, the irradiation device may be provided with the set of frequency specific polarization setting elements being configured for setting the first and second electric field polarizations. The polarization setting elements may comprise e.g., dichroic (wavelength-dependent) half-waveplates.

According to yet another preferred variant, at least one of the first and second radiation pulses may be subjected to an individual intensity control before the superposition thereof. To this end, the valley current generating apparatus, preferably the irradiation device thereof, may include a filter device being arranged for subjecting at least one of the first and second radiation pulses to an individual intensity control before the superposition thereof. The filter device may comprise at least one wavelength-dependent (dichroic) optical filter or at least one neutral-density filter placed in at least one of the interferometer arms, e.g., the relative phase is set in a Michelson type interferometer.

According to a further preferred embodiment of the invention, a direction of the electrical charge carrier current, in particular between the electrodes at the solid sample, may be changed by changing at least one of the first and second electric field polarizations and/or the relative phase of the first and second electric fields. This step has advantages in particular for signal processing applications of the invention. Different logical states presented by different valley current directions in the solid material can be addressed by different settings of the first and second radiation pulses.

Alternatively or additionally, the relative phase of the electric fields of the first and second radiation pulses may be changed for changing and/or reversing a current density of the electrical charge carrier current or suppressing the electrical charge carrier current. Suppressing the electrical charge carrier current preferably may comprise a temporal current control, like a repeated off- and on-switching of the valley current.

Alternatively or additionally, a helicity of the circular polarization of the first radiation pulses may be changed for selecting said one of the valleys creating the net electrical charge carrier current. Advantageously, by changing the relative phase of the electric fields of the first and second radiation pulses and in addition the helicity of the first radiation pulses (e.g. from right- to left-handed circular polarization), full control over both the current direction and the source of valley current (either the K or K' valley in case of a material with two valleys) is obtained.

In summary, the inventors demonstrated lightwave-driven valley control, e.g., in graphene. It was shown that by dressing the band structure with polarization-tailored bichromatic fields composed from a fundamental and its second harmonic field, valley degrees of freedom can be directly accessed. For the first time, lightwave-driven valley currents were demonstrated with control over current direction (valley current, i.e., current originating from either the K or K' valley) and 100 % valley selectivity (valley polarization, i.e., selective population of K or K' valley). Observing these phenomena by means of electric currents in graphene is advantageous as graphene exhibits an unparalleled carrier mobility paired with a broadband and flat optical response that makes it an ideal electro-optic platform for lightwave electronics [5, 6, 25], and also for lightwave valleytronics [13, 26].

Applications of the invention, e.g., in encoding, processing and/or storing information, lightwave information processing, and processing logical operations generally may be implemented by using the solid material as a logical element. An input of the logical element may be provided by at least one of the first and second radiation pulses within the superimposed polarized radiation pulses, wherein the at least one of the first and second radiation pulses may represent an input information, like 1 or 0, coded in the polarization and/or phase property thereof. The valley current may provide the output of the logical element, wherein the presence and/or direction of the valley current may code an output information, like 1 or 0, which depends on the input information. Information coded in the polarization of at least one of the radiations pulses may be converted into one of at least two different currents, having e.g., different current directions. For sensing applications, a polarization of a light field of laser pulses may be sensed by measuring the presence and/or direction of a valley current created with the light field and a further reference light field of a second laser pulse.

Features disclosed in the context of the valley current generating method and embodiments thereof also represent preferred features of the inventive valley current generating apparatus and embodiments thereof. The aforementioned aspects and inventive and preferred features, in particular with regard to the configuration of the valley current generating apparatus as well as the dimensions and compositions of individual components being described in relation to the valley current generating apparatus, also apply for the valley current generating method. The preferred embodiments, variants and features of the invention described above are combinable with one another as desired.

Brief description of the drawings

Further details and advantages of the invention are described in the following with reference to the attached drawings, which schematically show in:

Figure 1: features of preferred embodiments of the valley current generating apparatus according to the invention;

Figure 2: a band structure of graphene with the two valleys centered around the K and K' points;

Figure 3: effects of polarized radiation pulses created by superposition of first and second radiation pulses having different polarization features;

Figures 4 and 5: graphical representations of measured relative phase- and polarization-dependent valley currents;

Figures 6 and 7 graphical representations of a lightwave-engineered Floquet-Bloch band structure;

Figures 8 and 9: graphical representations of sub-cycle trajectory dynamics;

Figure 10: an embodiment of valley current generation with a teardrop-shaped waveform;

Figures 11 and 12: graphical representations of a phase stability of the collinear interferometer;

Figure 13: an example for determining a Floquet dressing in a Dirac band structure;

Figure 14: a graphical representation of a light-dressed band structure; and

Figure 15: a graphical representation of pulse length dependencies referring to the excitation types shown in Figure 3.

Preferred embodiments of the invention

Features of preferred embodiments of the invention are described in the following with particular reference to generating valley currents by the effect of superimposed radiation pulses having different polarization features. Details of the solid material used for generating valley currents, like graphene, and methods of manufacturing and preparing thereof are not described as far as they are known per se from prior art. Furthermore, details of applications of generating valley currents can be implemented as known per se from valleytronic or light wave form sensing techniques. The invention is not restricted to the particular case of using graphene as the solid material, but rather can employ other materials as mentioned above.

Details of the valley current generating apparatus and the operation thereof are not restricted to the particular embodiments described below. Irradiation parameters, like the different centre frequencies, electric field strengths and different polarizations of the first and second radiation pulses and the relative phase of the electric fields of the first and second radiation may be selected in practice in dependency on practical applications conditions, e.g., based on numerical simulations of the valley current generation and/or based on experimental tests.

Valley current generating apparatus

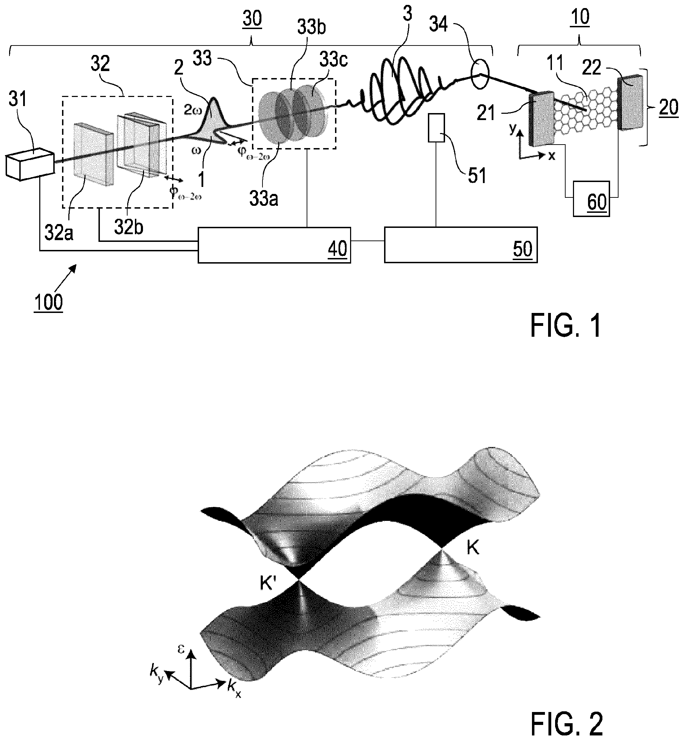

The valley current generating apparatus 100 with features of embodiments of the invention, as shown in Figure 1, comprises the solid material 10, the electrode device 20 and the irradiation device 30. Preferably, the valley current generating apparatus 100 may be provided with a control device 40, like at least one computer unit, being arranged for controlling the irradiation device 30, and/or a diagnostic device 50, including at least one detector unit 51. Optionally, an electrical circuit (in particular a current measuring device) 60 may be provided for measuring and/or further processing the generated valley current.

The solid material 10 employed for valley current generation comprises a monolayer 11 of graphene (graphene strip). While the monolayer 11 has a size of about 2 $\mu$m * 10 $\mu$m for the practical tests described below, a smaller or larger solid material may be employed. For example, the size may be reduced to about 1 $\mu$m * 1 $\mu$m or below for valleytronic applications. With other applications, like with long-range transport measurements, a larger size of about 100 $\mu$m * 100 $\mu$m or larger may be used. As a further alternative, a multilayer arrangement made of multiple graphene layers may be used. Depending on the mechanical stability of the solid material, a substrate (not shown) may be provided which is configured for accommodating the solid material and supporting it in a stable fashion. The monolayer may be epitaxially grown directly on the substrate, made of e. g., silicon carbide.

Optionally, the solid material 10 may be mounted in a vacuum chamber (not shown). In particular, the tests described below have been performed under high vacuum conditions ($1 \times 10^{-8}$ hPa) at room temperature.

The electrode device 20 comprises two electrode contacts 21, 22 made of gold with a layer thickness of e.g., 30 nm and being arranged with a mutual distance on one or both of the surfaces of the monolayer 11. Optionally, more than two electrode contacts may be provided, e.g., for additional charge carrier manipulations and/or sensing purposes. Furthermore, at least one of the electrode contacts 21, 22 may be integrated in a substrate (not shown) of the solid material 10.

A spacing between the electrode contacts 21, 22 provides an irradiation section with a distance between the electrode contacts 21, 22, which is equal or larger than a spot diameter of the focussed polarized radiation pulses irradiating the monolayer 11, e. g. in a range from 1 $\mu$m to 100 $\mu$m. Optionally, an adhesion layer, e.g., made of titanium (thickness e.g., 5 nm) may be arranged between the electrode contacts 21, 22 and the monolayer 11. Details on the fabrication and characterization as used for practical tests of the invention are provided in [6]. Bond wires, e.g., made of gold, connect the electrode contacts 21, 22 with the electrical circuit 60, like a chip for photocurrent measurements. Depending on the application of the invention, the electrical circuit 60 is the current measuring device, which allows in particular measuring of valley currents (depending on the relative phase and/or polarization of the first and second electric fields) via the electrode contacts 21, 22.

The irradiation device 30 comprises a laser source device 31, a two-color interferometer 32, polarization setting elements 33 and optionally a relaying and focussing element 34, like an off-axis parabolic mirror. Depending on the application of the invention, the laser source device 31 may be considered as a part of the valley current generating apparatus 100, in particular of the irradiation device 30 thereof. Alternatively, the laser source device 31 or generally any light source creating the first and second radiation pulses (see below) may be considered as a separate component.

With the practical tests executed by the inventors, the laser source device 31 comprises e.g., an amplified 80 MHz erbium-doped fiber oscillator, creating primary laser pulses at a fundamental photon energy $\hbar\omega = 0.8$ eV (1550 nm central wavelength) with a pulse duration of 170 fs (intensity full width at half maximum, FWHM), combined with at least one optical non-linear element (not shown).

The optical non-linear element comprises e.g., a type-I phase-matched bismuth borate crystal (BiBO), thickness e.g., 1 mm, being arranged for frequency doubling the primary laser pulses, so that fundamental (first radiation pulses 1) and second harmonic (second radiation pulses 2, photon energy $2\hbar\omega = 1.6$ eV, 775 nm central wavelength, 110 fs FWHM) pulse pairs co-propagate with orthogonal linear polarization. Each of the pulse pairs provides a superposition of the first radiation pulse 1 (fundamental) and the second radiation pulse 2 (second harmonic) superimposed with each other. As an alternative, two synchronized laser sources (not shown) could be employed for creating the first and second radiation pulses. Optionally, a filter device (not shown) may be arranged for setting the power of at least one of the first and second radiation pulses 1, 2.

The two-color interferometer 32 is arranged for relaying the first and second radiation pulses 1, 2 along a collinear beam path and for controlling the two-color phase $\varphi_{\omega\text{-}2\omega}$ of the first and second radiation pulses 1, 2 [33]. The collinear interferometer includes birefringent elements, e.g. made of calcite, wherein a first calcite plate 32a (thickness $d_a$ e.g., 3 mm) is oriented with its ordinary (o) axis parallel to the polarization of the second radiation pulse 2 and its extraordinary (e) axis parallel to the polarization of the first radiation pulse 1, and, for subsequent wedged calcite elements 32b, the axes are rotated by 90° to invert the situation. As the first and second radiation pulses 1, 2 experience different frequency dependent refractive indices along the respective axes ($n_{e,\omega}$ = 1.47, $n_{o,\omega}$ = 1.64, $n_{e,\,2\omega}$ = 1.48, $n_{o,\,2\omega}$ = 1.65), the interferometer configuration allows to provide the first radiation pulses 1 with a head-start after the first calcite plate 32A, which are subsequently caught up by the second radiation pulses 2 in the calcite wedge pair 32B, 32C [44]. By finely tuning the inserted thickness $d_b$ of the wedges 32b, the relative phase is controlled as

$$\varphi_{\omega-2\omega} = \frac{2\omega}{c}\left(d_a\,\Delta n^{\mathrm{oe}}_{\omega-2\omega} + d_b\,\Delta n^{\mathrm{eo}}_{\omega-2\omega}\right) \tag{1}$$

with

$$\Delta n^{kl}_{\omega-2\omega} = n^{k}_{\omega} - n^{l}_{2\omega}$$

Temporal overlap is determined by maximizing the $\omega + 2\omega$ sum frequency signal obtained from another optical non-linear element, e.g., a type-II phase-matched beta barium borate (BBO) crystal, in a subsequent reference path (not shown).

Each of the wedged calcite elements 32b is adjustable (see double arrow) by shifting the wedge perpendicular to the beam path in the interferometer 32, so that the effective thickness of the wedge in the beam path may be set and/or modulated. Each of the wedged calcite elements 32b may be provided with a wedge driving element (not shown), e.g., a piezoelectric actuator, being arranged for causing the shifting movement. Each wedge driving element may be arranged to be controlled with the control device 40.

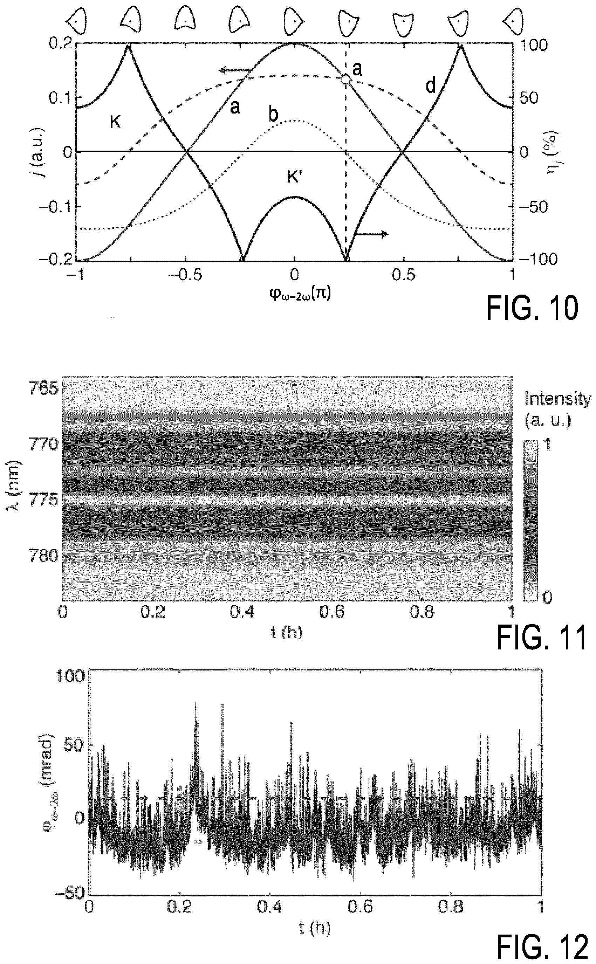

The collinear interferometer design enables a particularly high passive phase stability exhibiting 14.6 mrad integrated phase jitter over 1 h, equivalent to 6 as timing jitter only, as shown by the measurements presented in Figures 11 and 12. Figure 11 illustrates the interference fringes at $2\omega$ measured every 35 ms for 1 h with a spectrometer integration time of 10 ms and Figure 12 illustrates the reconstructed jitter of $\varphi_{\omega\text{-}2\omega}$ obtained from a cosine square fit, yielding a root mean square of 14.6 mrad (dashed lines). Pulse dispersion upon wedge insertion is negligible as less than four periods of $\varphi_{\omega\text{-}2\omega}$ are sampled with rather narrow-band spectra at both colors.

The polarization setting elements 33 are arranged for individually adjusting the polarization state of the each of the first and second radiation pulses 1, 2. To this end, they include in a sequence a first dichroic half-waveplate (HWP) 33a, a superachromatic quarter-waveplate (QWP) 33b and second dichroic HWP 33c. This arrangement allows to continuously transition between co-rotating circularly polarized (COR), counter-rotating circularly polarized (CNR), and teardrop polarized (TD) waveforms, with variable orientation, wherein the TD waveforms are preferably employed for the generation of valley currents.

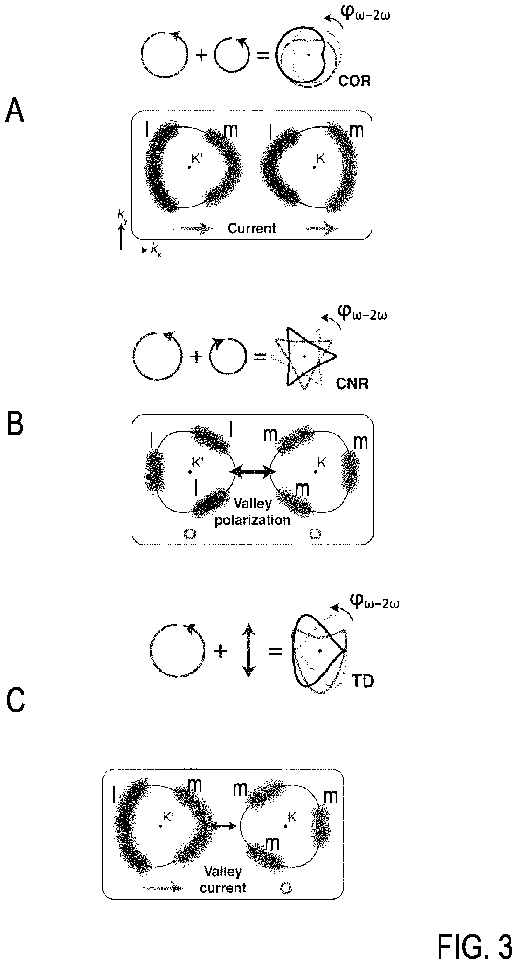

With more details, for individual control over the ellipticity and rotation of the polarization ellipse of both of the first and second radiation pulses 1, 2, the delayed pulses are subsequently sent through the sequence of the dichroic HWP 33a acting on the second radiation pulses 2 with frequency $2\omega$ only, the superachromatic QWP 33b acting on both of the first and second radiation pulses 1, 2, and the dichroic HWP 33c, which counteracts the ellipsoidal tilt of the polarization of the second radiation pulses 2 introduced by the QWP 33b upon rotation of HWP 33a. As HWP 33a is rotated (see Figure 3), the ellipticity of the polarization of the second radiation pulses 2 is changed from +1 (waveplate angle 45°) to 0 (22.5°) and -1 (0°), and then back to 0 (22.5°) and +1 (-45°), while polarization of the first radiation pulses 1 is kept constant at circular (ellipticity +1).

Each of the dichroic HWPs 33a, 33c is adjustable by rotating the plate with a rotation axis parallel to the beam path of the first and second radiation pulses 1, 2, so that the ellipticity of the polarization may be set. Each of the dichroic HWPs 33a, 33c may be provided with a plate driving element (not shown) being arranged for causing the rotating movement. Each plate driving element may be arranged to be controlled with the control device 40.

This sequentially generates the COR, TD and CNR waveforms, and further the TD and COR waveforms with a phase slip of $\Delta\varphi_{\omega\text{-}2\omega} = \pi$, as shown in Figure 3. The waveplates' retardation is calibrated to a wire-grid polarizer, wherein their dichroic performance is ensured with long- and shortpass filters (not shown) in addition. The resulting radiation pulses 3 (bichromatic waveforms 3) are tightly focused onto the monolayer 11 using a 15 mm off-axis parabolic mirror 34 (Figure 1). With the practical tests, $1/e^2$ intensity radii of the foci of 2.9 $\mu$m ($\omega$) and 1.9 $\mu$m ($2\omega$) were measured in color-filtered in-situ knife-edge measurements. At the focus on the graphene monolayer 11, the fundamental field strength is measured to be e.g., 0.27 V nm$^{-1}$, with a field ratio of second harmonic to fundamental of 75 %.

For photocurrent detection with the electrical circuit 60, the pulse train of the polarized radiation pulses 3 is focussed to the monolayer 11 between the electrode contacts 21, 22 such that only the graphene is illuminated. For testing the apparatus, $\varphi_{\omega-2\omega}$ may be modulated from pulse to pulse at $f_{mod}$ = 117 Hz with the wedge driving element mounted to one of the calcite wedges 32a, 32b to isolate waveform-dependent currents from photo-thermoelectric currents and other static background.

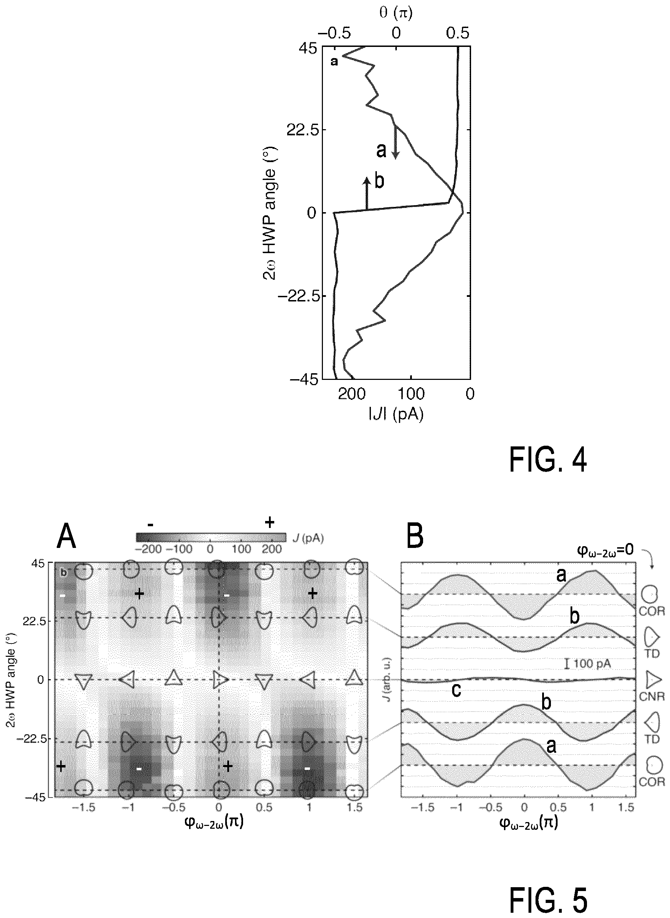

With the electrical circuit 60, the resulting current is amplified via transimpedance amplification and recorded via dual-phase lock-in detection referenced to $f_{mod}$. Each data point shown in Figures 4 and 5 is recorded with a 300 ms time constant and averaged over 25 data samples. The amplitude of the piezo stroke is calibrated via an external laser diode Michelson interferometer with one end mirror attached to the modulated calcite wedge. When the resulting modulation depth of $\varphi_{\omega-2\omega}$ reaches $\pi$, the signal amplitude detected by the lock-in amplifier is maximized. The measured lock-in phase, $\theta$ (Figure 4), is equivalent to the absolute phase $\varphi_{\omega-2\omega}$ as the temporal overlap of both first and second radiation pulses 1, 2 was determined.

Depending on the application of the invention, the configuration of the valley current generating apparatus 100 may be modified, e.g., if the first and second radiation pulses 1, 2 are provided by the laser source device 31 with preset phase and polarization properties, e.g., representing information coded in optical signals. Accordingly, in particular components 32, 33, which are used here for testing purposes may be omitted or modified.

Valley current generation and tests of the valley current generating apparatus

For generating valley currents with the valley current generating apparatus 100, the solid material 10 is irradiated with the polarized radiation pulses 3, which are created by the superposition of the first radiation pulses 1 and the second radiation pulses 2 having different centre frequencies in the uv, vis and/or ir spectral ranges. The electric field of the polarized radiation pulses 3 is shaped by setting the electric field polarizations of the first and second radiation pulses 1, 2 such that they differ from each other and by setting the relative phase of the electric fields of the first and second radiation pulses 1, 2, so that a net electrical charge carrier current is created in the solid material 10 by one of the valleys thereof. The physical background of this valley current generation is explained in the following with particular reference to Figures 2 to 15.

It is noted that, for illustrative purposes, reference is made in the following not only to superimposed polarized radiation pulses 3 with different electric field polarizations of the first and second radiation pulses 1, 2 (asymmetric Lissajous figure, TD), but also to variants of polarized radiation pulses 3 with equal polarization types (Lissajous figures with an axis of symmetry, COR, CNR). For the valley current generation, the polarized radiation pulses 3 with different electric field polarizations, i.e. pulses of type TD (see below) are used.

Valley-selective excitation of graphene

Figure 2 schematically illustrates the band structure of graphene with the two valleys centered around the K and K' point. The top surface is the conduction band, while the bottom surface is the valence band. The valleys around K and K' are characterized by the well-known Dirac cone dispersion, which becomes trigonally warped with increasing distance from the Dirac points [25]. Due to mirror symmetry of the K and K' trigonal warping, valley degrees of freedom can be accessed by shaping the incident bichromatic electric field E(t) such that it drives electrons on an intraband momentum trajectory,

$$\mathbf{k}(t) = \mathbf{k}_0 + \frac{e}{\hbar} \int_{-\infty}^{t} \mathbf{E}(t') dt'$$

which matches or anti-matches the underlying trigonally warped valleys (e > 0, elementary charge; $\hbar$, reduced Planck's constant; $k_0$, initial momentum).

As explained with further details below, Figures 3A to 3C schematically show the conduction band excitation of graphene with a COR (Figure 3A, resulting in currents from both valleys), a CNR (Figure 3B, resulting in valley polarization) and a TD waveform (Figure 3C, resulting in valley-selective current of the invention), each provided by the superimposed polarized radiation pulses 3 of the first and second radiation pulses 1, 2, shown in Figure 1. The polarization of the superimposed polarized radiation pulses 3 is illustrated with Lissajous figures, as described below.

The indices m, I schematically indicate more (m) or less (I) residual electron excitation after the superimposed polarized radiation pulses 3 is gone. This directly leads to a (valley) current (arrows) or valley polarization (double arrows) when a left-right asymmetry is generated either within at least one of the two valleys individually (intra-valley asymmetry like in Figure 3A or in Figure 3C around K') or between the two valleys (inter-valley like in Figure 3B).

In the CNR case (Figure 3B) no currents result because momentum symmetry is preserved within each valley. The TD case (Figure 3C) leads to both valley current and valley polarization. Depending on the phase and polarization of the polarized radiation pulses, it can be varied which valley (K and K') is addressed by continuously rotating the polarization via a change in $\varphi_{\omega-2\omega}$.

The Lissajous figures illustrated in Figure 3 result from the superposition of the first radiation pulses 1 (fundamental laser pulses ($\omega$)) and the second radiation pulses 2 (second harmonic ($2\omega$)) with properly chosen polarization states and relative timing between the two laser pulses $\varphi_{\omega-2\omega}$ (see Figure 1). For each of these waveforms, the conduction band population remaining after the waveform has interacted with the graphene (so-called residual conduction band population) is investigated. To understand the emergence of the qualitatively different patterns in the residual conduction band distribution of Figures 3A to 3C, the respective electron intraband trajectories k(t) and the associated interband excitation probabilities are compared.

The co-rotating circularly polarized (COR) waveform exhibits a strongly left-right asymmetric Lissajous figure (Figure 3A), resulting in a left-right asymmetric intraband trajectory: Electrons initially residing on opposite sides of the Dirac points experience different interband excitation probabilities because they are driven close to the Dirac point (where they are likely lifted to the conduction band), or away from it. As a result, an intra-valley momentum imbalance may be expected (Figure 3A, m vs. l indices shading), generating equal ballistic currents from both valleys [5, 27].

By flipping the helicity of the second harmonic, a counter-rotating circularly polarized (CNR) waveform results (Figure 3B). Upon tuning $\varphi_{\omega-2\omega}$, its trefoil Lissajous figure can be oriented such that it matches the trigonal warping at K' and anti-matches it at the K valley, or vice versa. Accordingly, electrons driven in the two valleys may experience a different excitation probability, yielding an inter-valley occupation imbalance, i.e., valley polarization (Figure 3B, m vs. l indices shading) [28, 29]. While the excited intra-valley distribution may be patterned, its total amount is left-right symmetric in each valley, such that no ballistic current is expected.

In a third, intermediate, case, the valley-selective current generation is realized by admixing first and second radiation pulses 1, 2 with different polarizations, wherein in particular a linearly polarized second harmonic is superimposed with a circularly polarized fundamental field. The resulting teardrop (TD)-shaped waveform (Figure 3C) combines the capabilities of intra- and inter-valley symmetry breaking provided by the COR and CNR waveform, respectively.

Advantageously, the TD waveform generates a valley-selective current [30-32] with 100 % selectivity between the K and K' valley (Figure 3C), hence a 100 % pure valley current.

Light-field-driven current generation

To probe the three scenarios of valley control - current generation, valley polarization, and valley current generation (Figure 3), the inventors measured optical waveform-dependent photocurrents from graphene generated by the different bichromatic laser waveforms of the polarized radiations pulses 3. The optical setup used for waveform synthesis is described above with reference to Figure 1.

Figures 4 and 5 illustrate the measured relative phase- and polarization-dependent currents, wherein Figure 4 shows a current amplitude |J| (curve a) and phase $\theta$ (curve b) as a function of the angle of $2\omega$ half-waveplate 33a (see Figure 1) controlling the ellipticity of the second radiation pulses 2 for $\varphi_{\omega-2\omega} = 0$ (vertical dashed line in Figure 4), Figure 5A shows a 2D map of J as a function of $\varphi_{\omega-2\omega}$ and the angle of $2\omega$ half-waveplate 33a (insets exemplify the respective Lissajous figures), and Figure 5B shows lineouts of J (horizontal dashed lines in Figure 5A) as a function of $\varphi_{\omega-2\omega}$ for the indicated Lissajous figures, generating current (curves a), valley current (curves b) and valley polarization (curve c).

With more details, Figure 5A shows the measured waveform-dependent photocurrent mapped out as a function of the bichromatic polarization state of the first and second radiation pulses 1, 2 and $\varphi_{\omega-2\omega}$. On the vertical axis, the $2\omega$ ellipticity of the second radiation pulses 2 is tuned while keeping the of the first radiation pulses 1 ($\omega$) with circular polarization. Accordingly, it is continuously swept from a COR to a TD and a CNR waveform and further to a TD and COR waveform again (see Lissajous figures right of Figure 5B). Changing $\varphi_{\omega-2\omega}$ with the two-color interferometer device 32 results in a continuous rotation of the Lissajous figures, as exemplified by the insets of Figure 5A and observed as alternating direction of current injection (Figure 5A and lineouts in Figure 5B). This sinusoidal oscillation as function of $\varphi_{\omega-2\omega}$ is well known for $\omega$ - $2\omega$ coherent control [34, 35], but it is shown below that the origin is of different nature here.

The vertical lineout of the current magnitude |J| (Figure 4, curve a) and the corresponding lock-in phase $\theta$ (Figure 4, curve b) show that sweeping the angle of the $2\omega$ half waveplate 33a from +45° to -45° results in an inversion of the current direction with a zero-crossing at 0° and approximately identical magnitude for equal rotation to positive and negative angles. The remarkably large magnitude of up to 214 pA obtained for the COR waveform can be assigned to the substantially more efficient momentum symmetry breaking compared to CEP-controlled current generation [35-37]. As the waveplate 33a is rotated to generate the TD waveform, |J| decreases to approximately 140 pA. Finally, with the CNR waveform, |J| further decreases to a minimum of 12 pA, whereas 0 is expected for this setting. Experimental imperfections of the polarization state result in this non-zero current. Importantly, the strong overall suppression of current injection supports the generation of valley polarization by the CNR waveform, as will be further discussed in more detail below.

Remarkably, the lock-in phase θ is almost constant for positive and negative angles of waveplate 33a except for an abrupt π-jump at 0°. Here, rotating the waveplate 33a results in a phase jump $\Delta\varphi_{\omega\text{-}2\omega} = \pi$, which mirrors the Lissajous figures. Importantly, the flatness of θ indicates that the observed currents can be assigned exclusively to the above discussed momentum symmetry breaking rules. Other current injection mechanisms such as those assigned to virtual charge carriers can be ruled out as they would contribute to the measured signal with a shifted phase relation [6].

Floquet-Bloch analysis of valley selectivity

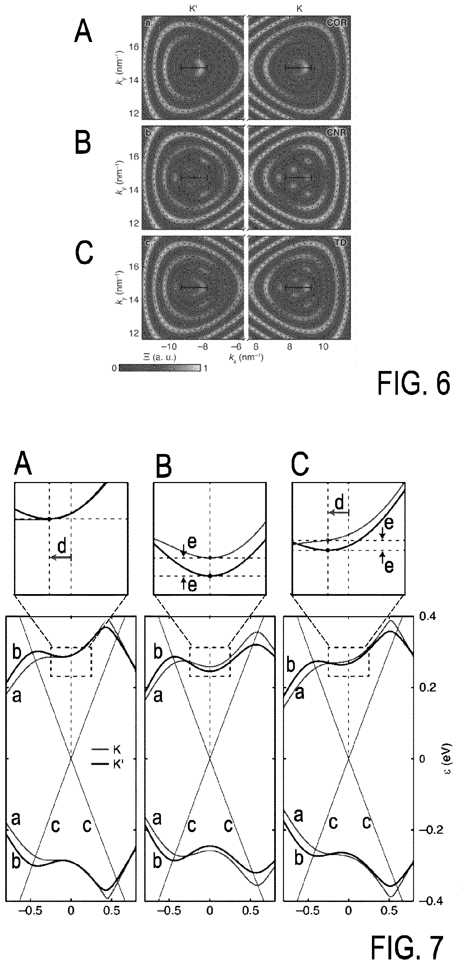

To substantiate that these observations are direct evidence of individual control over the graphene valleys, a two-fold theoretical analysis on the interaction of the light fields with graphene was performed. First, in a time-independent picture, the valley selectivity of the light-dressed band structure is demonstrated, i.e., by analyzing the emerging Floquet-Bloch bands. Second, in a time-resolved approach, a numerical solution and an analytical analysis to the sub-cycle intra- and interband dynamics are provided that explain the characteristic momentum distributions and the emergence of ballistic currents. The following theoretical analysis refers to Figures 6, 7, 13 and 14, described with more details below. The theoretical analysis is based on Floquet theory. Applying the Floquet theory is used for illustrative purposes only, and the implementation of the invention is not restricted to using Floquet theory.

For describing the application of Floquet analysis and AC Stark effect, a Floquet Hamiltonian for the light-dressed graphene from a two-band next-neighbour tight-binding Hamiltonian

$$\mathcal{H}_0(\mathbf{k}) = \gamma \begin{bmatrix} 0 & f(\mathbf{k}) \\ f^*(\mathbf{k}) & 0 \end{bmatrix}$$

$$(2)$$

is employed with a hopping parameter γ = -2.9 eV and

$$f(\mathbf{k}) = \exp\left(i\frac{ak_y}{\sqrt{3}}\right) + 2\exp\left(-i\frac{ak_y}{2\sqrt{3}}\right)\cos\left(\frac{ak_x}{2}\right)$$

$$(3)$$

where a = 2.46 Å is the lattice constant of graphene. By coupling $\mathcal{H}_0$ (k) to the desired continuous-waveform E(t) of fundamental periodicity $T_0 = \frac{2\pi}{\omega}$

$$\mathbf{k}(t) = \mathbf{k}_0 + \frac{e}{\hbar}\int_{-\infty}^{t} \mathbf{E}(t')\mathrm{d}t'$$

the sub-blocks of the Floquet Hamiltonian are obtained as [45]

$$\mathcal{H}_F^{mn}(\mathbf{k}_0) = \frac{1}{T_0}\int_0^{T_0} \mathcal{H}_0(\mathbf{k}(t))\mathrm{e}^{i(m-n)\omega t}\mathrm{d}t + \delta_{mn}m\hbar\omega\sigma_0$$

$$(4)$$

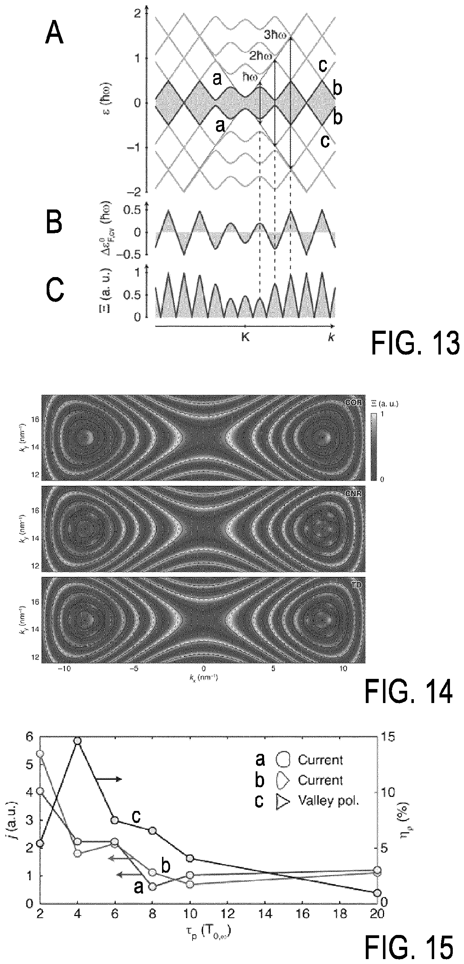

wherein |m-n| is the order of the Floquet replica, which is numerically expanded up to order 10. The replica is obtained by diagonalizing $\mathcal{H}_F$. As hybridization gaps form between neighbouring replica at multi-photon resonant bandgaps, they are used to map out the position of these dressed resonances in momentum space and their modification with respect to the field-free resonances (see minimal example Figure 13). In analogy to reducing crystal momenta to a first Brillouin zone, all dressed resonances are imprinted to the zero-order replica, such that the analysis is reduced to the respective valence and conduction bands, $\varepsilon_{F,v}^0 = (\mathbf{k}_0)$ and $\varepsilon_{F,c}^0 = (\mathbf{k}_0)$. The Floquet dressing is visualized in Figures 6 and 14 by plotting

$$\Xi(\mathbf{k}_0) = 2 \left| \frac{\varepsilon_{F,cv}^0(\mathbf{k}_0)}{\hbar\omega} - \frac{1}{2} \right|$$

(5)

where $\varepsilon_{cv}(\mathbf{k}) = \varepsilon_c(\mathbf{k}) - \varepsilon_v(\mathbf{k})$ is the band separation.

To further capture the position of the light-dressed resonances, the AC Stark effect is considered. Based on the ponderomotive potential [46]

$$U_p(\mathbf{k}_0) = \frac{1}{T_0} \int_0^{T_0} [\varepsilon_{cv}(\mathbf{k}(t)) - \varepsilon_{cv}(\mathbf{k}_0)] \, dt$$

(6)

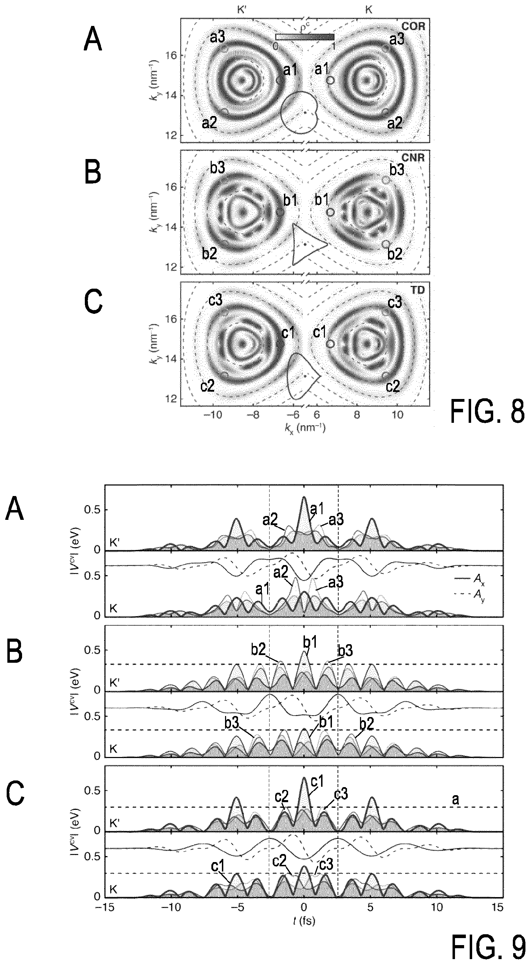

it determines the renormalization of the field-free bands due to the cycle-averaged energy stored in intraband motion. In Figure 14 the AC Stark-shifted resonances (dashed lines) are compared with the field-free resonances (solid lines). Upon comparison with the Floquet-dressed resonances (local maxima of $\Xi$), a perfect match with the AC Stark resonances becomes evident away from the K points. Close to the Dirac points, the AC Stark picture breaks down, as it incorporates intraband motion only. Here, the AC Stark effect suggests a simple channel closing of the single-photon resonance (see missing dashed lines of the AC Stark-shifted single-photon resonance in Figure 14), whereas the Floquet analysis ($\Xi$) provides a much more detailed structure. Comparing the resulting population density maps (see Figures 8A to 8C) with the Floquet-predicted resonances, a clear correlation is obtained. This shows that the Floquet-Bloch states are the correct picture to predict resonance shapes, leading to currents and valley selectivity.

For illustrating the application of Floquet theory describing the band-dressing difference for the K and K' points of graphene, further reference is made to Figures 6, 7, 13 and 14. Figure 6 shows dressed bands under excitation with a co-rotating COR (Figure 6A), counter-rotating CNR (Figure 6B), and teardrop TD (Figure 6C) waveform. For all cases, a two-cycle pulse (10.1 fs FWHM) at 1550 nm fundamental wavelength with peak field of $E_0 = 1$ V nm$^{-1}$ and second harmonic field admixture of 75 % is applied. The Floquet dressing $\Xi$ indicates the position of multi-photon resonances between the Floquet-Bloch bands (at its local maxima); the dashed contours indicate the AC Stark-shifted resonances. The inner-most contour corresponds to the two-photon resonance because the one-photon resonance is lifted by channel closing, as discussed below with reference to Figure 13.

Figure 7A, 7B and 7C show line-outs of the zero-order Floquet bands for the COR (Figure 7A), CNR (Figure 7B), and TD (Figure 7C) waveform. The bands near the K (curves a) and K' point (curves b) are plotted together to compare the respective deformation of the Dirac nodes. Solid lines c indicate the field-free tight-binding dispersion. Arrows d in the insets indicate momentum shifts (evaluated for K') and arrows e indicate energy differences of the Dirac nodes. For the COR waveform a shift by 0.19 % of the Brillouin zone width is obtained, while for the TD case it is 0.18 %, and < 0.01 % for CNR. The differences in bandgap opening between K and K' amount to 1.78 % of $\hbar\omega$ for the TD case, 3.22 % for the CNR waveform, and < 0.06 % for COR.

Figure 13 illustrates a minimal example for determining the Floquet dressing ($\Xi$) in a Dirac band structure, wherein Figure 13A shows the field-free band structure (lines a) underneath the Floquet replica resulting from excitation with 0.8 eV circularly polarized light with E0 = 0.12 V nm$^{-1}$ (lines b, zero-order; lines c, higher orders). The band separation between the conduction and valence band of the zero-order Floquet replica, $\varepsilon_{F,v}^0 = (\mathbf{k})$ and $\varepsilon_{F,c}^0 = (\mathbf{k})$ is shaded. To account for the multiple Floquet replica allowing for multi-photon transitions (positions indicated in Figure 13A), the dressed band separation $\varepsilon_{F,v}^0 = (\mathbf{k})$ is shifted by - 0.5 $\hbar\omega$ (Figure 13B). This highlights (shaded) each region in K space where these multi-photon resonances arise, corresponding to both positive and negative peaks. As shown in Figure 13C, the Floquet dressing $\Xi$ is obtained by taking the absolute value of this dressed and shifted band separation (see below, Eq. (5)). The local maxima of $\Xi$ indicate k-positions of Floquet-dressed single- and multi-photon resonances (see dashed lines).

Figure 14 illustrates a light-dressed band structure, wherein Floquet dressing $\Xi$ codes the position of multi-photon resonances (at its local maxima) between the Floquet-Bloch bands (see Figure 13) dressed by a COR (Figure 14A), TD (Figure 14A), and CNR (Figure 14C) waveform. Resonances of the field-free band structure (solid lines) as well as the AC Stark-shifted resonances (dashed lines) are overlayed. The innermost solid contours around K/K' indicate the field free single-photon resonance which is lifted by channel closing of the AC-Stark shifted single-photon resonance. The same driving parameters as for Figure 6 are employed.

With further details, for describing the application of Floquet theory, the tight-binding Hamiltonian (described equation (2)) is re-cast into a time-independent basis using the periodicity of the driving field. Figures 6A to 6C show the resulting multi-photon resonances of the Floquet-dressed band structure, which are obtain from analyzing the dressed zero-order Floquet band replica (see Figure 13). Overlaid, the AC Stark-shifted multi-photon resonances are plotted (starting with the two-photon resonance) as dashed contours, capturing the locations of the Floquet-predicted resonances (see above). As expected for driving with non-linearly polarized fields, a bandgap on the order of the photon energy is opened by all three waveforms (lineouts in Figures 7A to 7C) [9, 23]. As a result, the shape of the initially circular single-photon resonance is strongly deformed with patterns characteristic to the respective exciting waveforms (Figures 6A to 6C, innermost features). Similarly, the two-photon resonance is deformed. Asymmetric waveforms (COR, TD) generate asymmetrically dressed valleys (Figures 6A, 6C) and produce currents, whereas symmetric waveforms (CNR) generate symmetrically dressed valleys (seen in the 3-fold rotation axis around K and K', Figure 6B) and, hence, produce no current. Higher-lying resonances are modified less, while their shift compared to the field-free band structure is well captured by the AC Stark shift (see Figure 14).

Under closer inspection, a waveform-dependent unidirectional shift of the dressed Dirac nodes away from both the K/K' points is found for the asymmetric COR and TD waveforms (Figures 7A, 7C, insets, arrows d), while for the symmetric CNR waveform, their position remains unchanged within numerical accuracy [38]. Remarkably, this unidirectional shift of the Dirac node occurs only for waveforms that generate a current.

In addition, a waveform-dependent difference in the dressed bandgap magnitude at K and K' between CNR and TD driving is noted (Figure 7B, 7C, insets, arrows e). This is a key marker for valley selectivity, and it is shown here that this is valid even beyond materials with broken inversion symmetry [39]. By utilizing complex two color driving waveforms of first and second radiation pulses 1, 2, a valley pseudo-spin degree of freedom and therefore valley polarization in graphene can be engineered, as well characterized by Floquet analysis.

Sub-cycle analysis of valley selectivity

To further explore the influence of the peculiar band dressing on the excited carrier momentum distribution, the time-dependent dynamics are modelled. Figure 8 shows the residual conduction band distributions obtained from a numerical solution of the time-dependent Schrödinger equation (TDSE), as described in the following. For all three driving laser waveforms, the population occurs prominently close to the K and K' point, matching the Floquet-dressed resonances (Figures 8A to 8C, dashed contours; same as in Figures 6A to 6C). In addition to the Floquet analysis results, off-resonant population predominantly between the two innermost resonances is observed, evidencing intraband motion-assisted strong-field excitation [5, 40].

The TDSE computations are implemented as follows. To simulate the dynamics and final state of the system, the time-dependent Schrödinger equation (TDSE) is employed. The framework set up in Higuchi et al. [5] is utilized to propagate the Hamiltonian (Eq. (2)) in time, with the vector potential of the polarized radiation pulses 3 in minimal coupling. The bichromatic field of the superimposed first and second radiation pulses 1, 2 is considered as

$$\mathbf{A}(t) = -\frac{E_0 F(t)}{\omega}\Im\left[\mathbf{p}_\omega \mathrm{e}^{i\omega t} + \frac{\mathcal{R}}{2}\mathbf{p}_{2\omega}\mathrm{e}^{i(2\omega t + \varphi_\omega - 2\omega)}\right]$$

$$(7)$$

with $E_0$ the peak electric field strength of the fundamental, *F(t)* a cosine-squared envelope function, and R the second harmonic field admixture. The waveform-dependent polarization projections read

$$\mathbf{p} = [(1,\, 0),\, (0,\, 1),\, (1,\, \pm i)/\sqrt{2}]$$

for x/y linearly polarized light or right-/left- handed circularly polarized light. The carrier-envelope phase is set to zero for both colors to disable symmetry breaking by their individual waveforms.

After the pulse's envelope has decayed to zero (t -> ∞), the final population $p_\alpha(k)$ is projected onto the initial, field-free eigenstates of the valence and conduction band ($\alpha$ = c, v). To calculate the resulting ballistic current density, the group velocity

$$v_\alpha(\mathbf{k}) = \hbar^{-1}\frac{\partial}{\partial k_x}\varepsilon_\alpha(\mathbf{k})$$

times the population is integrated over the entire Brillouin zone and across both the conduction and valence bands:

$$j = 2e \sum_{\alpha=c,v} \int_{BZ} v_\alpha(\mathbf{k}) \rho_\alpha(\mathbf{k}) \frac{d\mathbf{k}}{(2\pi)^2}$$

$$(8)$$

To estimate the degree of valley polarization and valley current, an asymmetry parameter,

$$\eta = \frac{S_K - S_{K'}}{S_K + S_{K'}}$$

$$(9)$$

is invoked, wherein the quantity S is integrated over the region of the K or K' valley of the Brillouin zone, respectively. By replacing S with the current density j or with the population $\rho$, a unit-less parameter is obtained which is 0 for currents or population that are equivalent for the K and K' valley, and reaches $\pm 1$ for fully valley-specific currents/populations originating from the K/K' valley.

Figure 8 illustrates the sub-cycle trajectory dynamics by showing residual momentum distribution after excitation with a COR (Figure 8A), CNR (Figure 8B), and TD (Figure 8C) waveform. The dashed contours indicate the dressed multi-photon resonances as obtained in Figures 6A to 6C. For all cases, a two-cycle pulse (10.1 fs FWHM) at 1550 nm fundamental wavelength with peak field of $E_0 = 1$ V nm$^{-1}$ and second harmonic field admixture R = 75 % is applied. The insets display the respective momentum trajectories during the center optical cycle to scale with the initial momentum marked by a dot. The full evolution is shown as an example in Figure 9B. Figures 9A to 9C show the temporal profile of the dipole coupling $|V^{cv}|$ for different initial momenta in the K and K' valley as marked in panels Figures 8A to 8C. The shading refers to the center optical cycle; the dashed horizontal lines are a guide to the eye to compare $|V^{cv}|$ at K and K'.

After excitation with a COR waveform (Figure 8A), crescent-shaped features are obtained, each around K and K' located at the two innermost resonances. Their asymmetric shapes around each valley gives rise to intra-valley momentum asymmetry in the $k_x$ direction. Integrated over the entire Brillouin zone (Eq. (8)), this intra-valley asymmetry results in a ballistic current density of j = 654 $\times$ 10$^3$ A m$^{-1}$. The ballistic current density j can be linked directly to the experimentally obtained currents, since their $\varphi_{\omega\text{-}2\omega}$ dependent directionality is preserved (Figure 5B), while the measured amplitude is reduced by secondary diffusive transport, carrier relaxation and impurity scattering.

The momentum distribution excited by the CNR waveform (Figure 8B) fragments into triangular features, highlighted with the circles. This threefold symmetric momentum distribution within each valley cancels out any ballistic current generation. Instead, it efficiently generates inter-valley occupation asymmetry, yielding a valley polarization of $\eta_\rho$ = 5.4 % (Eq. (9)) [28, 41].

Finally, the TD waveform (Figure 8C) generates a momentum distribution with features reminiscent of both the COR and CNR excitation. This momentum distribution combines the crescent-shaped features (visible at the three-photon resonance) leading to $k_x$ intra-valley asymmetry and the triangular features (visible at the two-photon resonance) resulting in inter-valley asymmetry. Accordingly, a ballistic current density of j = 861 $\times$ 10$^3$ A m$^{-1}$ and a valley polarization of $\eta_\rho$ = 2.7 % are obtained from the momentum distribution. Critically, the $k_x$ intra-valley asymmetry is more pronounced in the K' than in the K valley, see off-resonant features between the two- and three-photon resonances next to the circles c. For this reason, the TD waveform facilitates substantial valley-selective current generation, with 370 $\times$ 10$^3$ A m$^{-1}$ from the K valley and 491 $\times$ 10$^3$ A m$^{-1}$ from the K' valley, as discussed below in detail.

While here particularly short and broadband 2-cycle waveforms are employed for better visibility of the features, the discussed behaviour holds also for longer waveforms as in the experiment. This is illustrated in Figure 15, which shows a pulse length dependence of observables. For all employed waveforms, results for a two-color pulse (polarized radiation pulse 3) consisting of 1550 nm fundamental wavelength with $E_0 = 1$ V nm$^{-1}$ and a second harmonic pulse with R = 75 % field admixture are shown. $\tau_p$ indicates the FWHM of the common pulse duration, with $T_{0,\omega}$ = 5.17 fs. While the magnitudes of j (COR, TD) and $\eta_\rho$ (CNR) generally decreases as the pulse duration increases, the qualitative behaviour of current generation valley polarization injection is robust to $\tau_p$. The quantitative decrease strongly depends on the field strength of the two colors.

To describe the emergence of these characteristic patterns and the underlying valley control on a sub-cycle time scale, it is suitable to switch from the picture of time-independent light-dressed bands to a picture of time-dependent inter- and intraband electron dynamics. These dynamics are highlighted for three exemplary electrons with initial momenta equidistant to the respective K and K' point (Figures 8A to 8C, circles). Figures 9A to 9C show the respective time evolution of the interband dipole coupling $V^{cv}(t) = E(t) \cdot d^{cv}(k(t))$ (instantaneous Rabi frequency modulo $\hbar$), which approximates the instantaneous change of excitation probability [42] (in Figure 9, the curves correspond to the equally marked electrons in Figure 8). $d^{cv}(k(t))$ is the interband transition dipole matrix element, exhibiting a strongly varying magnitude in momentum space with singularities at the Dirac points [43]. The stark differences in $|V^{cv}|$ occurring prominently during the center optical cycle (areas between vertical dashed lines in Figures 9A to 9C) become clear with the corresponding trajectories drawn in Figures 8A to 8C: The COR waveform drives the circle a1 marked electron in the K' valley close to the Dirac point, resulting in a large excitation probability (Figure 9A), whereas it is suppressed for the circle a2 and circle a3 marked electrons, which are driven away from the Dirac point. Hence all three exemplary electrons are shown to assist in the generation of intra-valley momentum asymmetry, observed in the distribution of Figure 8A and measured as a large current (Figures 4, 5). The three marked electrons in the K valley contribute likewise.

In contrast, the CNR waveform drives all three exemplary electrons in the K' valley equally close to the Dirac point. At the K point, the same three electrons come close to the Dirac point only for a highly confined duration at the trefoil peaks, lowering their excitation probability. In the dipole coupling (Figure 9B) this is reflected in a larger amplitude of $|V^{cv}|$ for each electron around K' compared to K. Importantly, these valley-specific differences in interband coupling result in a valley polarized conduction band population. In addition, since the relative amplitudes of circle b1 versus circle b2 and circle b3 are not exchanged between K and K' (as is the case for the COR waveform, Figure 9A), there is no intra-valley momentum asymmetry. This allows to identify the drastic reduction of the measured current to close to zero (Figures 4, 5) as an experimental generation of valley-polarized graphene.

In the hybrid case of the TD waveform (Figure 8C), a large difference in dipole coupling for the circle c1 marked electron is found between the K and K' points (Figure 9C), similar to the co-rotating case (Figure 9A). However, the circle c2 and circle c3 marked electrons experience an almost identical amplitude in $|V^{cv}|$ during the central cycle within both valleys. This results in an intra-valley momentum imbalance, which is dominated by the circle c1 marked electrons. Importantly, the temporal structure of $|V^{cv}|$ for the circle c2 and circle c3 marked electrons differs substantially between the K and K' valley, giving rise to differences in excitation probability. In analogy to the CNR case, these differences arise from a different length of stay near the Dirac points during the flanks (K') or rounded peaks (K) of the TD trajectories. As a result, the two valleys experience a different momentum imbalance (inter-valley asymmetry), such that it can be concluded that both the excited population and the measured current (Figures 4, 5) are valley polarized. However, since the TD waveform lacks the exact three-fold symmetry of the valleys, its efficacy in generating valley polarization is reduced compared to the CNR waveform.

To ensure the claims of valley selectivity from the TDSE simulations of short 2-cycle pulses shown in Figures 8 and 9 match that of the longer pulses used in the experiment, the current density j and valley polarization $\eta_\rho$ is calculated for all three employed waveforms as a function of the pulse duration $\tau_p$ (see Figure 15). While the magnitude of j and $\eta_\rho$ generally decreases as the pulse duration increases, the qualitative behavior of current generation for the COR and TD waveform and valley polarization injection for the CNR waveform is robust to $\tau_p$. The decrease of these observables as a function of $\tau_p$ results from a decreasing optical bandwidth, which in turn accesses a decreasing electronic density of states confined to multi-photon orders (see Figures 8A to 8C), while the quantitative decrease strongly depends on the field strength of the two colors.

Valley current control

For demonstrating the full potential of the TD waveform in generating valley current as a critical degree of freedom for implementing lightwave valleytronics, Figure 10 further illustrates the valley current generation with the teardrop-shaped waveform TD, wherein the ballistic current density j (curve a) and its decomposition into contributions from the K (curve b) and K' valley (curve c) are shown as a function of $\varphi_{\omega-2\omega}$. A circularly polarized pulse at 1550 nm with $E_0 = 0.27$ V nm$^{-1}$ is employed with 75 % admixture of linearly polarized second harmonic, as in the above practical tests. The Lissajous figures in Figure 10 exemplify the resulting waveform for various $\varphi_{\omega-2\omega}$. The degree of valley polarized current $\eta_j$ (curve d) reaches unity for selected values of $\varphi_{\omega-2\omega}$ with current generated from K or K' exclusively.

While the field strength of $E_0 = 0.27$ V nm$^{-1}$ is identical to the above practical tests, an 8-cycle pulse (duration of 41.4 fs FWHM) is used, which is long enough to suppress any CEP sensitivity but short enough to comply with reasonable computational resources. Contrary to the COR and CNR waveform, varying $\varphi_{\omega-2\omega}$ not only leads to a rotation of the Lissajous figure but also deforms it to shapes that lack any mirror axis, e.g., at $\varphi_{\omega-2\omega} = \pm \pi/4$ (Figure 10, top row). Similar to the measured current (Figure 5B, curves b), j modulates sinusoidally as a function of $\varphi_{\omega-2\omega}$. Strikingly, a decomposition of the current into its contributions from the K ($j_K$, dotted curve b) and K' valley ($j_{Kt}$, dashed curve c) shows that it is 100 % valley selective (curve d) whenever one valley component has a zero crossing as a function of $\varphi_{\omega-2\omega}$. Specifically, the degree of valley polarized current, $\eta_j$ (Eq. (9)), reaches unity for $\varphi_{\omega-2\omega} = \pm 0.24\pi$ and $\pm 0.76\pi$. Despite the absence of $j_K$, the total current density is only decreased by 33 % of its global maximum obtained for $\varphi_{\omega-2\omega} = 0$ (Figure 10, circle e), providing this excitation as a viable approach to valley polarized current generation. Moreover, full control over the valley to be addressed is obtained by changing $\varphi_{\omega-2\omega}$ by $\pi$ and the direction of valley current flow by inverting the helicity of the fundamental (first radiation pulses 1). The tests illustrated in Figures 4 and 5 show that full valley current control has been obtained.

Advantageously, the invention allows to consolidate and merge two new but already widely employed approaches to understand the light-matter interaction. By considering a Floquet-engineered light-dressed band structure with valleys distinctively dressed by the respective multi-cycle laser waveform, symmetries and imbalances of excited electrons can be straightforwardly identified. This approach averages over at least one optical cycle by nature. Analyzing the sub-cycle electron dynamics allows to understand the microscopic origin of the observables. Hence, the observations of the inventors represent an important unifying link between the time-independent Floquet-Bloch bands and trajectory-driven sub-optical-cycle attosecond physics in solids. This demonstration of lightwave valley control allows the configuration of lightwave electronics and valleytronic applications and for sculpting the topology of future light-dressed quantum materials.

The features of the invention disclosed in the above description, the drawings and the claims can be of significance both individually as well as in combination or sub-combination for the realization of the invention in its various embodiments. The invention is not restricted to the preferred embodiments described above. Rather a plurality of variants and derivatives is possible which also use the inventive concept and therefore fall within the scope of protection. In addition, the invention also claims protection for the subject and features of the sub claims independently of the features and claims to which they refer.

## Claims

1. Valley current generating method for manipulating charge carriers in a solid material (10) having a band structure with a Brillouin zone including valleys localized in the Brillouin zone, comprising a step of

   - irradiating the solid material (10) with pulsed radiation comprising polarized radiation pulses (3), which are created by a superposition of first radiation pulses (1) having a first centre frequency and a first electric field with a first electric field polarization and second radiation pulses (2) having a second centre frequency and a second electric field with a second electric field polarization, wherein
   - the first and second centre frequencies differ from each other, and
   - the polarized radiation pulses (3) have an electric field shaped such that a net electrical charge carrier current is created in the solid material (10) by one of the valleys,
   **characterized in that**
   - each of the first and second centre frequencies is included in a spectral range covering at least one of ultraviolet, visible and infrared light frequencies, and
   - the electric field of the polarized radiation pulses (3) is shaped by setting the first and second electric field polarizations such that they differ from each other and by setting a relative phase of the first and second electric fields.

2. Valley current generating method according to claim 1, wherein

   - the first centre frequency is a frequency of infrared light and the second centre frequency is a frequency of visible light.

3. Valley current generating method according to one of the foregoing claims, wherein

   - the second radiation pulses (2) are provided by creating a second or higher harmonic of the first radiation pulses (1).

4. Valley current generating method according to one of the foregoing claims, wherein

   - the first radiation pulses (1) have a circular polarization and the second radiation pulses (2) have a polarization deviating from a circular polarization, in particular comprising an elliptic or linear polarization.

5. Valley current generating method according to one of the foregoing claims, wherein

   - the solid material (10) comprises a 2D material (11), in particular a non-doped material, like graphene.

6. Valley current generating method according to one of the foregoing claims, comprising at least one of the features

   - the relative phase of the first and second electric fields is set by transmitting the first and second radiation pulses (1, 2) through separate beam paths of an interferometer including at least one adjustable phase setting element in at least one of the beam paths thereof,
   - the first and second electric field polarizations are set by transmitting the first and second radiation pulses (1, 2) through a set of frequency specific polarization setting elements, and

- subjecting at least one of the first and second radiation pulses (1, 2) to an individual intensity control before the superposition thereof.

7. Valley current generating method according to one of the foregoing claims, comprising a step of

- changing a direction of the electrical charge carrier current by changing at least one of the first and second electric field polarizations and/or the relative phase of the first and second electric fields.

8. Valley current generating method according to one of the foregoing claims, comprising at least one of

- changing the relative phase of the electric fields for changing and/or reversing a current density of the electrical charge carrier current or suppressing the electrical charge carrier current, and
- changing a helicity of the circular polarization of the first radiation pulses (1) for selecting said one of the valleys creating the net electrical charge carrier current.

9. Valley current generating apparatus, being configured for manipulating charge carriers in a solid material (10), comprising

- the solid material (10) having a band structure with a Brillouin zone including valleys localized in the Brillouin zone,
- an electrode device (20) with at least two electrode contacts (21, 22) being coupled with the solid material (10), and
- an irradiation device (30) being arranged for irradiating the solid material (10) with pulsed radiation comprising polarized radiation pulses (3), wherein the irradiation device (30) is configured for creating the polarized radiation pulses (3) by creating first radiation pulses (1) having a first centre frequency and a first electric field with a first electric field polarization and second radiation pulses (2) having a second centre frequency and a second electric field with a second electric field polarization and by superimposing the first and second radiation pulses (1, 2), wherein
- the first and second centre frequencies differ from each other, and
- the polarized radiation pulses (3) have an electric field shaped such that a net electrical charge carrier current is created in the solid material (10) by one of the valleys,
**characterized in that** the irradiation device (30) is configured for creating the first and second radiation pulses (1, 2) such that
- each of the first and second centre frequencies is included in a spectral range covering at least one of ultraviolet, visible and infrared light frequencies, and
- the electric field of the polarized radiation pulses (3) is shaped by setting the first and second electric field polarizations such that they differ from each other and by setting a relative phase of the first and second electric fields.

10. Valley current generating apparatus according to claim 9, wherein

- the irradiation device (30) includes a radiation source device (31) being configured for creating the first radiation pulses (1), wherein the first centre frequency is a frequency of infrared light, and for creating the second radiation pulses (2), wherein the second centre frequency is a frequency of visible light.

11. Valley current generating apparatus according to one of the claims 9 to 10, wherein

- the irradiation device (30) includes an optical non-linear element being arranged for providing the second radiation pulses (2) by creating a second or higher harmonic of the first radiation pulses (1).

12. Valley current generating apparatus according to one of the claims 9 to 11, wherein

- the irradiation device (30) is configured for providing the first radiation pulses (1) with a circular polarization and the second radiation pulses (2) with a polarization deviating from a circular polarization, in particular comprising an elliptic or linear polarization.

13. Valley current generating apparatus according to one of the claims 9 to 12, wherein

- the solid material (10) comprises a 2D material (11), in particular a non-doped material, like graphene.

14. Valley current generating apparatus according to one of the claims 9 to 13, comprising at least one of the features

- the irradiation device (30) includes an interferometer (32) having at least one adjustable phase setting element in at least one beam path of the interferometer, said at least one adjustable phase setting element being configured for setting the relative phase of the first and second electric fields,
- the irradiation device (30) includes a set of frequency specific polarization setting elements (33) being configured for setting the first and second electric field polarizations, and
- the irradiation device (30) includes a filter device being arranged for subjecting at least one of the first and second radiation pulses (1, 2) to an individual intensity control before the superposition thereof.

15. Method of using the valley current generating method or apparatus according to one of the foregoing claims for at least one of

- encoding, processing and/or storing information,
- lightwave information processing,
- processing logical operations, and
- sensing a polarization of a light field.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

## EUROPEAN SEARCH REPORT

**Application Number**

EP 24 17 5546

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAMLET K AVETISSIAN ET AL: "Efficient high-harmonic generation in graphene with two-color laser field at orthogonal polarization", ARXIV.ORG, CORNELL UNIVERSITY LIBRARY, 201 OLIN LIBRARY CORNELL UNIVERSITY ITHACA, NY 14853, 24 May 2022 (2022-05-24), XP091217149, DOI: 10.1103/PHYSREVB.105.195405 | 1,3,5-9, 11,13,14 | INV. G02F1/35 G02F1/01 ADD. G02F1/37 |
| Y | * the whole document * | 2,4,10, 12 | |
| X | SAMBIT MITRA ET AL: "Lightwave-controlled band engineering in quantum materials", ARXIV.ORG, CORNELL UNIVERSITY LIBRARY, 201 OLIN LIBRARY CORNELL UNIVERSITY ITHACA, NY 14853, 23 March 2023 (2023-03-23), XP091467137, * the whole document * | 1,2,9, 11,15 | |
| Y | KAMALESH JANA ET AL: "Flying doughnut terahertz pulses generated from semiconductor currents", ARXIV.ORG, CORNELL UNIVERSITY LIBRARY, 201 OLIN LIBRARY CORNELL UNIVERSITY ITHACA, NY 14853, 10 October 2023 (2023-10-10), XP091673077, DOI: 10.1126/SCIADV.ADL1803 * the whole document * | 2,4,10, 12 | **TECHNICAL FIELDS SEARCHED (IPC)** G02F |

The present search report has been drawn up for all claims

| Place of search | Date of completion of the search | Examiner |
|---|---|---|
| The Hague | 29 October 2024 | Topak, Eray |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. N. BASOV et al.** Towards properties on demand in quantum materials. *Nature Materials*, 2017, vol. 16, 1077-1088
- **M. S. RUDNER et al.** Band structure engineering and non-equilibrium dynamics in Floquet topological insulators. *Nature Reviews Physics*, 2020, vol. 2, 229-244
- **E. GOULIELMAKIS et al.** Attosecond control and measurement: Lightwave electronics. *Science*, 2007, vol. 317, 769-775
- **M. GARG et al.** Multi-petahertz electronic metrology. *Nature*, 2016, vol. 538, 359-363
- **T. HIGUCHI et al.** Light-field-driven currents in graphene. *Nature*, 2017, vol. 550, 224-228
- **T. BOOLAKEE et al.** Light-field control of real and virtual charge carriers. *Nature*, 2022, vol. 605, 251-255
- **K. F. MAK et al.** Control of valley polarization in monolayer MoS2 by optical helicity. *Nature Nanotechnology*, 2012, vol. 7, 494-498
- **Y. YE et al.** Electrical generation and control of the valley carriers in a monolayer transition metal dichalcogenide. *Nature Nanotechnology*, 2016, vol. 11, 598-602
- **T. OKA et al.** Photovoltaic hall effect in graphene. *Physical Review B*, 2009, vol. 79 (081406)
- **J. W. MCIVER et al.** Light-induced anomalous hall effect in graphene. *Nature Physics*, 2019, vol. 16, 38-41
- **R. E. F. SILVA et al.** All-optical valley switch and clock of electronic dephasing. *Optics Express*, 2022, vol. 30, 30347
- **N. RANA et al.** All-optical ultrafast valley switching in two-dimensional materials. *Physical Review Applied*, 2023, vol. 19, 034056
- **F. LANGER et al.** Lightwave valleytronics in a monolayer of tungsten diselenide. *Nature*, 2018, vol. 557, 76-80
- **I. TYULNEV et al.** Valleytronics in bulk MoS2 by optical control of parity and time symmetries. *arXiv:2302.12564*, 2023
- **S. MITRA et al.** Lightwave-controlled band engineering in quantum materials. *arXiv:2303.13044*, 2023
- **D. XIAO et al.** Valley-contrasting physics in graphene: Magnetic moment and topological transport. *Physical Review Letters*, 2007, vol. 99, 236809
- **Y. H. WANG et al.** Observation of Floquet-Bloch states on the surface of a topological insulator. *Science*, 2013, vol. 342, 453-457
- **Y. KOBAYASHI et al.** Floquet engineering of strongly driven excitons in monolayer tungsten disulfide. *Nature Physics*, 2023, vol. 19, 171-176
- **S. ITO et al.** Build-up and dephasing of Floquet-Bloch bands on subcycle timescales. *Nature*, 2023, vol. 616, 696-701
- **V. TIWARI et al.** Floquet theory and computational method for the optical absorption of laser-dressed solids. *Physical Review B*, 2023, vol. 108
- **O. NEUFELD et al.** Floquet group theory and its application to selection rules in harmonic generation. *Nature Communications*, 2019, vol. 10, 405
- **A. CASTRO et al.** Floquet engineering the band structure of materials with optimal control theory. *Physical Review Research*, 2022, vol. 4, 033213
- **Y. WANG et al.** Topological Floquet engineering using two frequencies in two dimensions. *Physical Review A*, 2023, vol. 107, 043309
- **A. GALLER et al.** Mapping light-dressed Floquet bands by highly nonlinear optical excitations and valley polarization. *The Journal of Physical Chemistry Letters*, 2023, vol. 14, 11298-11304
- **A. H. C. NETO et al.** The electronic properties of graphene. *Reviews of Modern Physics*, 2009, vol. 81, 109-162
- **J. R. SCHAIBLEY et al.** Valleytronics in 2D materials. *Nature Reviews Materials*, 2016, vol. 1, 16055
- **O. NEUFELD et al.** Light-driven extremely nonlinear bulk photogalvanic currents. *Physical Review Letters*, 2021, vol. 127, 126601
- **M. S. MRUDUL et al.** Light-induced valleytronics in pristine graphene. *Optica*, 2021, vol. 8, 422-427
- **Á. JIMÉNEZ-GALÁN et al.** Sub-cycle valleytronics: control of valley polarization using few-cycle linearly polarized pulses. *Optica*, 2021, vol. 8, 277-280
- **Y. JIANG et al.** Generation of pure bulk valley current in graphene. *Physical Review Letters*, 2013, vol. 110
- **S. SHARMA et al.** Giant and controllable valley currents in graphene by double pumped THz light. *Nano Letters*, 2023, vol. 23, 10305-10310
- **S. SHARMA et al.** Light-shaping of valley states. *Nano Letters*, 2023, vol. 23, 11533-11539

- **D. BRIDA et al.** Phase-locked pulses for two-dimensional spectroscopy by a birefringent delay line. *Optics Letters*, 2012, vol. 37, 3027
- **R. ATANASOV et al.** Coherent control of photocurrent generation in bulk semiconductors. *Physical Review Letters*, 1996, vol. 76, 1703-1706
- **F. LANGER et al.** Few-cycle lightwave-driven currents in a semiconductor at high repetition rate. *Optica*, 2020, vol. 7, 276-279
- **C. HEIDE et al.** Optical current generation in graphene: CEP control vs $\omega + 2\omega$ control. *Nanophotonics*, 2021, vol. 10, 3701-3707
- **V. HANUS et al.** Light-field-driven current control in solids with pJ-level laser pulses at 80 MHz repetition rate. *Optica*, 2021, vol. 8, 570-576
- **O. NEUFELD et al.** Band nonlinearity-enabled manipulation of Dirac nodes, Weyl cones, and valleytronics with intense linearly polarized light. *Nano Letters*, 2023, vol. 23, 7568-7575
- **Á. JIMÉNEZ-GALÁN et al.** Lightwave control of topological properties in 2d materials for sub-cycle and non-resonant valley manipulation. *Nature Photonics*, 2020, vol. 14, 728-732
- **M. S. WISMER et al.** Strong-field resonant dynamics in semiconductors. *Physical Review Letters*, 2016, vol. 116, 197401
- **M. S. MRUDUL et al.** Controlling valley-polarisation in graphene via tailored light pulses. *Journal of Physics B: Atomic, Molecular and Optical Physics*, 2021, vol. 54, 224001
- **T. WEITZ et al.** Strong-field Bloch electron interferometry for band structure retrieval. *arXiv:2309.16313*, 2023
- **H. K. KELARDEH et al.** Graphene in ultrafast and superstrong laser fields. *Physical Review B*, 2015, vol. 91, 045439
- **G. GHOSH**. Dispersion-equation coefFicients for the refractive index and birefringence of calcite and quartz crystals. *Optics Communications*, 1999, vol. 163, 95-102
- **U. D. GIOVANNINI et al.** Floquet analysis of excitations in materials. *Journal of Physics: Materials*, 2019, vol. 3, 012001
- **S. Y. KRUCHININ et al.** Colloquium: Strong-field phenomena in periodic systems. *Reviews of Modern Physics*, 2018, vol. 90, 021002